# EUROPÄISCHE PATENTANMELDUNG

(11) **EP 4 613 624 A2**
(43) Veröffentlichungstag der Anmeldung: **10.09.2025**
(21) Anmeldenummer: 25189934.0
(22) Anmeldetag: 26.04.2022
(51) Int. Cl.: B62M 9/02

(54) **ZUGMITTELGETRIEBEEINHEIT, EIN- ODER MEHRSPURIGES FAHRZEUG MIT ZUGMITTELGETRIEBEEINHEIT UND VERFAHREN ZUR MONTAGE UND ZUM BETRIEB EINES FAHRZEUGS**

(30) Priorität: 30.04.2021 DE 102021111293
(62) Teilanmeldung aus: 22725791.2
(71) Anmelder: Killwatt GmbH, 95643 Tirschenreuth (DE)
(72) Erfinder: Ackermann, Hans Peter, 95643 Tirschenreuth (DE); Ackermann, Volker, 95643 Tirschenreuth (DE); Lukac, Marian, 96001 Zvolen (SK)
(74) Vertreter: Zimmermann & Partner Patentanwälte mbB

(57) **Zusammenfassung**

Die Erfindung betrifft eine Zugmittelgetriebeeinheit mit einem Exzenterspanner, ein Fahrzeug mit einer Zugmittelgetriebeeinheit und mit einem Exzenterspanner sowie ein Verfahren zum Montieren eines Fahrzeugs.

## Beschreibung

Die Erfindung betrifft eine Zugmittelgetriebeeinheit für ein ein- oder mehrspuriges Fahrzeug, insbesondere Fahrrad, Pedelec, E-Bike oder Fahrrad mit Hilfsantrieb, sowie ein ein- oder mehrspuriges Fahrzeug, insbesondere Fahrrad, Pedelec, E-Bike oder Fahrrad mit Hilfsantrieb. Darüber hinaus betrifft die Erfindung ein Verfahren zur Montage eines Fahrzeugs.

Gattungsgemäße Fahrzeuge sind beispielsweise ein- oder mehrspurige Fahrzeuge wie Fahrräder, insbesondere Elektrofahrräder, E-Bikes oder Pedelecs. Insbesondere sind gattungsgemäße Fahrzeuge Teil der Fahrzeugklassen L1e, L2e, L3e, L4e, L5e, L6e und L7e gemäß Artikel 4 der EU-Verordnung 2013/168/EU vom 15. Januar 2013. Ferner zählen hierzu insbesondere Fahrzeuge mit einer bauartbedingten Höchstgeschwindigkeit von bis zu 6 km/h, Fahrzeuge, die ausschließlich für die Benutzung im sportlichen Wettbewerb bestimmt sind, Fahrräder mit Pedalantrieb mit Trethilfe, die insbesondere mit einem elektromotorischen Hilfsantrieb mit einer maximalen Nenndauerleistung von bis zu 250 W ausgestattet sind, dessen Unterstützung unterbrochen wird, wenn der Fahrer im Treten einhält, und dessen Unterstützung sich mit zunehmender Fahrzeuggeschwindigkeit progressiv verringert und unterbrochen wird, bevor die Geschwindigkeit des Fahrzeugs 25 km/h erreicht, selbstbalancierende Fahrzeuge mit elektromotorischem Fahrantrieb, Sportfahrzeuge mit Pedalantrieb, Fahrzeuge mit Pedalantrieb, die nicht mindestens einen Sitzplatz haben, und Fahrzeuge mit Pedalantrieb mit einem R-Punkt (gemäß ECE-R 17) ≤400 mm. Auch Lastenräder fallen hierunter. Sie weisen häufig ein Vorderrad und wenigstens ein Hinterrad auf, die über einen Rahmen miteinander verbunden sind. Es können allerdings auch mehrere Hinterräder, beispielsweise zwei Hinterräder, und/oder mehrere Vorderräder, beispielsweise zwei Vorderräder, insbesondere in beliebiger Kombination, vorhanden sein. Diese können beispielsweise quer zu einer Vorwärtsfahrrichtung nebeneinander, wie beispielsweise in einem Dreirad oder einem Fahrzeug mit einem Beiwagen, oder auch in Vorwärtsfahrrichtung hintereinander angeordnet sein, wie beispielsweise in einem Tandem. Das Vorderrad ist typischerweise um eine Vorderradachse und das Hinterrad um eine Hinterradachse rotierbar gelagert. Derartige Fahrzeuge werden immer häufiger mit wenigstens einem Elektromotor ausgestattet, der den Nutzer beim Antrieb des Fahrzeuges unterstützen soll. Typischerweise werden sie nicht von diesem Elektromotor alleine angetrieben, sondern der Elektromotor unterstützt den Nutzer beim Antrieb des Fahrzeugs aus eigener, menschlicher Muskelkraft. Der Grad der Unterstützung ist dabei meistens wählbar. Auf diese Weise kann ein Nutzer während einer Fahrt mit einem derartigen Fahrzeug genau so viel eigene Leistung aufbringen, wie er kann oder möchte, während er sich dennoch mit komfortabler und auch im Alltag nutzbarer Geschwindigkeit fortbewegt. Darüber hinaus können gattungsgemäße Fahrzeuge auch autonome Fahrzeuge sein, also Fahrzeuge, die ohne aktive Steuereingaben eines Fahrers betrieben werden können.

Üblicherweise weisen gattungsgemäße Fahrzeuge wenigstens ein Zugmittel auf, mit dem aus menschlicher Muskelkraft und/oder einem Antrieb, beispielsweise einem Elektromotor, stammende Antriebsenergie auf wenigstens ein angetriebenes Rad, beispielsweise wenigstens ein Hinterrad oder wenigstens ein Vorderrad, übertragbar ist. Als Zugmittel kommen typischerweise Ketten und/oder Riemen zum Einsatz. Beide Zugmittel haben ihre Vor- und Nachteile. So kommt es bei Ketten typischerweise zu einem erhöhten Verschleiß und vergleichsweise niedrigen Standzeiten. Riemen wiederum weisen zwar deutlich höhere Standzeiten auf, benötigen allerdings eine sehr hohe Vorspannung, um eine einwandfreie Kraftübertragung zu ermöglichen. Die damit einhergehenden Spannkräfte müssen üblicherweise vom Rahmen des Fahrzeuges aufgenommen werden.

Die CN 109 533 163 A beschreibt ein gattungsgemäßes Fahrzeug, insbesondere ein Klapprad, welches eine gattungsgemäße Zugmittelgetriebeeinheit zur Übertragung der Antriebsenergie aufweist. Die Zugmittelgetriebeeinheit umfasst ein von einer Antriebszugmittelscheibe angetriebenes Antriebszugmittel und ein eine Abtriebszugmittelscheibe antreibendes Abtriebszugmittel. Die Antriebszugmittelscheibe stellt somit den "Krafteingang" und die Abtriebszugmittelscheibe den "Kraftausgang" hin zum angetriebenen Rad dar. Im Fall der CN 109 533 163 A ist das Antriebszugmittel eine Kette und das Abtriebszugmittel ein Riemen. Das Antriebs- und das Abtriebszugmittel sind in Serie zueinander angeordnet und stehen über eine Übertragungszugmittelscheibeneinheit miteinander in Übertragungsverbindung. Die Übertragungszugmittelscheibeneinheit weist eine mit dem Antriebszugmittel in Eingriff stehende Eingangszugmittelscheibe und eine mit dem Abtriebszugmittel in Eingriff stehende Ausgangszugmittelscheibe auf, wobei die Eingangszugmittelscheibe und die Ausgangszugmittelscheibe koaxial zueinander drehbar sind. Die Eingangszugmittelscheibe und die Ausgangszugmittelscheibe sind drehfest zueinander. Die Antriebszugmittelscheibe wird von einer mit Pedalen und/oder einer Antriebseinheit verbundenen Antriebswelle angetrieben, treibt dadurch das Antriebzugmittel an, welches über die Übertragungszugmittelscheibeneinheit das Abtriebszugmittel antreibt, das wiederum die Abtriebszugmittelscheibe antreibt, die in Antriebsverbindung mit dem Hinterrad oder dem Vorderrad steht und dadurch eine Vortriebsbewegung auslöst.

Der aus dem Stand der Technik bekannte Aufbau des Fahrzeuges und der Zugmittelgetriebeeinheit bringt mehrere Nachteile mit sich. Zum einen sind sämtliche Getriebeelemente ortsfest am Rahmen des Fahrzeuges gelagert. Dies führt dazu, dass die Zugmittel zwischen diesen am Rahmen fixierten Getriebeelementen verspannt sind. Hierdurch werden die Spannkräfte, die durch die Vorspannung der Zugmittel entstehen, in den Rahmen eingeleitet, was vom Rahmen durch eine entsprechend schwere, robuste und unflexible Bauweise kompensiert werden muss, insbesondere im Fall von Riemen als Zugmittel. Da der Rahmen des konventionellen Fahrzeuges dazu genutzt wird, die Vorspannkräfte der Zugmittel aufzunehmen, können die Zugmittel auch erst dann auf ihre Vorspannung gebracht werden, nachdem sie am Rahmen und damit am Fahrzeug montiert worden sind. Hierdurch und durch die Tatsache, dass sämtliche Getriebeelemente ebenfalls für sich am Rahmen fixiert werden müssen, kommt es insgesamt zu einem erhöhten Montageaufwand bei den Getriebeeinheiten des Standes der Technik. Die hohen Vorspannkräfte, die für den Einsatz von Riemen erforderlich sind, können vom Endverbraucher in der Praxis typischerweise überhaupt nicht realisiert werden und gehen mit einem erhöhten Wartungsaufwand einher. Darüber hinaus müssen Verschiebungen des Achsabstandes zwischen der Antriebsachse und der Achse des angetriebenen Hinterrads, die durch Federbewegungen des Hinterrads gegenüber dem Rahmen zustande kommen, bisher über zusätzliche Spannelemente für die Zugmittel ausgeglichen werden, beispielsweise separate Kettenspanner. Sollen die Zugmittel auch bei einem Bremsvorgang des Fahrzeuges gespannt sein, beispielsweise, um über Rekuperation Antriebsenergie zurückzugewinnen, so müssten zwei derartige Spannelemente am Zugmittel angreifen, da hier Last- und Leertrum wechseln. Aufgrund der hohen Komplexität und der hohen Kosten wird dies daher typischerweise nicht umgesetzt.

Vor diesem Hintergrund ist es die Aufgabe der vorliegenden Erfindung, die Nachteile des Standes der Technik zu verringern oder aufzuheben. So soll eine verbesserte Zugmittelgetriebeeinheit und ein Fahrzeug mit einer verbesserten Getriebeeinheit angegeben werden. Insbesondere sollen die Montage und der Betrieb des Fahrzeugs und insbesondere der Getriebeeinheit vereinfacht werden.

Die Lösung der Aufgabe gelingt mit einer Zugmittelgetriebeeinheit, einem Fahrzeug und einem der Verfahren gemäß den unabhängigen Ansprüchen. Bevorzugte Weiterbildungen sind in den abhängigen Ansprüchen angegeben.

Konkret gelingt die Lösung bei einer eingangs genannten, gattungsgemäßen Zugmittelgetriebeeinheit dadurch, dass eine die Antriebszugmittelscheibe und die Eingangszugmittelscheibe lagernde erste Stützeinheit zur Aufnahme der Spannkräfte des Antriebszugmittels vorhanden ist, und eine die Ausgangszugmittelscheibe und die Abtriebszugmittelscheibe lagernde zweite Stützeinheit zur Aufnahme der Spannkräfte des Abtriebszugmittels vorhanden ist. Die erste Stützeinheit und die zweite Stützeinheit sind zusätzlich gegeneinander beziehungsweise relativ zueinander drehbar ausgebildet, insbesondere um die Übertragungszugmittelscheibeneinheit. Ein wesentlicher Kerngedanke der Erfindung liegt also darin, dass die Zugmittelgetriebeeinheit selbst derart ausgebildet ist, dass die Spannkräfte beziehungsweise Vorspannkräfte der verwendeten Zugmittel, also des Antriebszugmittels und des Abtriebszugmittels, von eigenen Stützeinheiten aufgenommen werden, die nicht Teil des Rahmens des Fahrzeuges sind. Damit gelingt es, für den Betrieb des Zugmittels erforderliche Spannkräfte von über die Zugmittelgetriebeeinheit zu übertragenden Drehmomenten zu entkoppeln, was insbesondere die nachstehend noch näher beschriebenen Vorteile mit sich bringt. Unabhängig vom konkreten Fahrzeug stellt die erfindungsgemäße Zugmitteleinheit somit eine eigenständige Baueinheit dar, die in sich zudem die für die Spannung der jeweiligen Zugmittel erforderlichen Spannkräfte aufnimmt. Die Stützeinheiten sind somit Teil der Zugmittelgetriebeeinheit selbst, so dass diese praktisch spannungsfrei am Rahmen des Fahrzeugs angeordnet beziehungsweise montiert werden kann. Die erste Stützeinheit und die zweite Stützeinheit nehmen dabei die Spannkräfte beziehungsweise Vorspannkräfte der Antriebszugmittel und der Abtriebszugmittel vollständig auf. Aus diesem Grund verhindern die Stützeinheiten ein Einleiten der Spannkräfte in den Rahmen. Die Antriebszugmittelscheibe, die Abtriebszugmittelscheibe sowie die Übertragungszugmittelscheibe sind drehbar in den jeweiligen Stützeinheit gelagert, so dass das die Zugmittelscheiben umlaufende Zugmittel in an sich bekannter Weise eine Drehbewegung um die jeweiligen Achsen übertragen kann. Zusätzlich sind allerdings die beiden Stützeinheiten auch zueinander drehbar, insbesondere um die Drehachse der Übertragungszugmittelscheibeneinheit. Durch die Drehbarkeit der Stützeinheiten gegeneinander kann der Abstand der Antriebszugmittelscheibe zur Abtriebszugmittelscheibe bzw. deren Drehachsen an bauliche Gegebenheiten des jeweiligen Fahrzeuges und/oder auch während des Betriebes dynamisch, beispielsweise bei Federvorgängen des Hinterrades, angepasst werden, wie nachstehend noch näher erläutert wird. Letztlich erhält die Zugmittelgetriebeeinheit somit einen Bewegungsfreiheitsgrad in einer Ebene senkrecht zur Drehachse der Antriebs- und der Abtriebszugmittelscheibe. An dieser Stelle ist es wichtig, hervorzuheben, dass durch eine solche Verdrehung der beiden Stützeinheiten zueinander, d.h. durch eine Änderung der Winkellage der beiden Stützeinheiten zueinander, die Spannung der Zugmittel selbst nicht beeinflusst wird. Wie nachstehend noch näher gezeigt werden wird, ermöglicht dieser Ansatz völlig neuartig, vollständig auf das Zugmittel im Betrieb "nachspannende" Elemente, wie beispielsweise üblicherweise einen Kettenspanner, zu verzichten. Dadurch, dass der Abstand der Antriebszugmittelscheibe zur Abtriebszugmittelscheibe variabel verändert werden kann, vereinfacht sich zudem die Montage der Zugmittelgetriebeeinheit erheblich.

Wesentlich ist auch, dass die erfindungsgemäße Zugmittelgetriebeeinheit als eigenständige, insbesondere von einer Person ohne weiteres tragbare, zusammenhängende Baueinheit mit in dieser Baueinheit losgelöst von einer Installation in einem Fahrzeug bereits final gespannten Zugmitteln ausgebildet ist. Das Zugmittelgetriebe stellt somit ein in optimaler Weise vielseitig nutzbares Funktionsmodul dar, welches einfach und ohne weiteren Aufwand an verschiedenste Achsabstände zwischen einer Antriebsdrehachse und einer Abtriebsdrehachse in einem Fahrzeug der eingangs genannten Art eingesetzt werden kann. Von der Größenordnung her liegt die Zugmittelgetriebeeinheit daher auch bevorzugt in einem Gewichtsbereich von kleiner 5kg, insbesondere kleiner 3kg. Ferner bietet es die Möglichkeit, einen, bevorzugt bis auf die Eingangs- und die Ausgangsanschlussstelle in sich geschlossenen, Antriebsstrang zu Verfügung zu stellen, der vormontiert praktisch einsatzfertig bereit gestellt werden kann, ohne dass nennenswerte individuelle Anpassungsmaßnahmen am Fahrzeug erforderlich sind.

Bei den Stützeinheiten kann es sich somit um Elemente handeln, die einerseits einen starren Abstand der Drehachsen der Antriebszugmittelscheibe und der Übertragungsmittelscheibeneinheit und andererseits einen starren Abstand der Drehachsen der Abtriebszugmittelscheibe und der Übertragungsmittelscheibeneinheit ermöglichen und die gleichzeitig Spannkräfte aufnehmen, die zur Spannung bzw. Aufrechterhaltung der Spannung der jeweiligen Zugmittel erforderlich sind. Dazu weisen die Stützeinheiten offensichtlich eine Mindeststabilität auf, die ausreicht, neben den über die Zugmittel eingeleiteten Spannkräften auch gleichzeitig die durch den Antrieb eingeleiteten Antriebskräfte aufzunehmen. Vorzugsweise sind die Stützeinheiten dazu beide zwischen den jeweiligen Drehachsen jeweils entlang einer Längsachse längserstreckt, insbesondere, besonders auch paarweise, stegartig, ausgebildet.

Innerhalb der Zugmittelgetriebeeinheit wird die Antriebsenergie von der Antriebszugmittelscheibe auf das Antriebszugmittel übertragen. Vom Antriebszugmittel wird die Antriebsenergie dann auf die Eingangszugmittelscheibe der Übertragungszugmittelscheibeneinheit übertragen, die diese wiederum an die Ausgangszugmittelscheibe weitergibt. Die Ausgangszugmittelscheibe treibt über das Abtriebszugmittel die Abtriebszugmittelscheibe an. Damit sind die wenigstens zwei Zugmittel somit in Reihe bzw. Serie bzw. in Kraftübertragungsrichtung funktional hintereinander angeordnet. Bevorzugt sind die Eingangszugmittelscheibe und die Ausgangszugmittelscheibe der Übertragungszugmittelscheibeneinheit koaxial zueinander angeordnet. Hierfür weist die Übertragungszugmittelscheibeneinheit bevorzugt eine Übertragungsachse auf, wobei die Eingangszugmittelscheibe und die Ausgangszugmittelscheibe koaxial zur Übertragungsachse angeordnet sind. Die Übertragungsachse stellt gleichzeitig bevorzugt ebenfalls diejenige Rotationsachse dar, um die die erste Stützeinheit und die zweite Stützeinheit relativ zueinander verschwenkbar ausgebildet sind. Die Übertragungsachse realisiert daher mit anderen Worten sozusagen das Knie zwischen den beiden Stützeinheiten.

Die Übertragung der Antriebsenergie von der Eingangszugmittelscheibe auf die Ausgangszugmittelscheibe kann grundsätzlich auf unterschiedliche Weise realisiert werden und beispielsweise in der Art verschiedenster Getriebe erfolgen. Beispielsweise könnten zusätzliche Getriebeelemente angeordnet sein, die die Antriebsenergie zwischen den beiden Zugmittelscheiben übertragen. Bevorzugt ist es allerdings, wenn die Eingangszugmittelscheibe und die Ausgangszugmittelscheibe drehfest zueinander ausgebildet sind. Besonders bevorzugt sind sie zusammen einstückig ausgebildet. Die Eingangszugmittelscheibe und die Ausgangszugmittelscheibe bilden dann somit zusammen ein einstückiges Bauteil. Auch die Übertragungszugmittelscheibeneinheit kann somit als einstückiges Bauteil realisiert sein, welches sowohl mit dem Antriebszugmittel als auch dem Abtriebszugmittel verbunden ist.

Wie nachstehend noch näher erläutert werden wird, kann mit der erfindungsgemäßen Zugmittelgetriebeeinheit eine bei gattungsgemäßen Fahrzeugen, typischerweise Fahrrädern, wechselseitige Beeinflussung zwischen Antrieb und Federung ("Antisquat") deutlich minimiert bis eliminiert werden, wobei dies gleichzeitig unter erhöhter konstruktiver Freiheit erfolgt, insbesondere dahingehend, dass eine Optimierung des Antisquats unabhängig vom Schnittpunkt der Zugmittellinie mit der im Stand der Technik an sich bekannten Antisquatlinie möglich ist. Ergänzend oder alternativ kann auch dem unerwünschten Effekt "Pedalkickback" effektiv entgegengewirkt werden. Hierfür kann es bevorzugt sein, wenn das Übersetzungsverhältnis von der Eingangszugmittelscheibe zur Ausgangszugmittelscheibe und/oder von der Antriebszugmittelscheibe zur Abtriebszugmittelscheibe und/oder von der Antriebszugmittelscheibe zur Eingangszugmittelscheibe und/oder von der Ausgangszugmittelscheibe zur Abtriebszugmittelscheibe eins zu eins beträgt. Grundsätzlich können hier selbstverständlich auch größere oder kleinere Übersetzungsverhältnisse eingesetzt werden. Bevorzugt ist allerdings ein Verhältnis von eins zu eins. Insbesondere in demjenigen Fall, in dem die Zugmittelscheiben der Übertragungszugmittelscheibeneinheit, also die Eingangszugmittelscheibe und die Ausgangszugmittelscheibe, denselben Wirkradius wie die Antriebszugmittelscheibe und die Abtriebszugmittelscheibe aufweisen, kann der Pedalkickback vollständig ausgeglichen werden. In diesem Fall liegt ebenfalls eine Eins-zu-Eins-Übersetzung zwischen diesen Zugmittelscheiben vor. Der Wirkradius bezeichnet dabei den radialen Abstand von einer mit dem Zugmittel in Kontakt stehenden Umfangsfläche der Zugmittelscheibe zur Rotationsachse. Die Erfindung ermöglicht es allerdings auch, einen beliebigen Pedalkickback einzustellen. Sind beispielsweise die Wirkradien der Eingangszugmittelscheibe und der Ausgangszugmittelscheibe, sprich der Übertragungszugmittelscheibeneinheit, kleiner als die Wirkradien der Antriebszugmittelscheibe und der Abtriebszugmittelscheibe, so tritt bei einer Einfederung des angetriebenen Rades, beispielsweise des Hinterrades, ein sogenannter positiver Pedalkickback ein, also ein entgegen der Tretrichtung gerichteter Pedalkickback. Sind beispielsweise dagegen die Wirkradien der Eingangszugmittelscheibe und der Ausgangszugmittelscheibe größer als die Wirkradien der Antriebszugmittelscheibe und der Abtriebszugmittelscheibe, so tritt bei einer Einfederung des angetriebenen Rades ein sogenannter negativer Pedalkickback ein, also ein in Tretrichtung gerichteter Pedalkickback. Zusammenfassend kann somit festgehalten werden, dass die erfindungsgemäße Zugmitteleinheit besonders vorteilhaft eine Variation des Übersetzungsverhältnisses erlaubt und damit insbesondere hinsichtlich des sogenannten Pedalkickbacks praktisch eine "Einstellung" des Pedalkickbacks hin zu individuellem Verhalten ermöglicht, umfassend eine Elimination eines Pedalkickbacks oder aber auch die Einstellung eines gewünschten Pedalkickbackverhaltens.

Hierzu muss auch nicht unbedingt ein Übersetzungsverhältnis von eins zu eins von der Eingangszugmittelscheibe zur Ausgangszugmittelscheibe vorliegen. Insbesondere kann es bei schnellen Fahrzeugen, beispielsweise Rennrädern, bevorzugt sein von der Eingangszugmittelscheibe zur Ausgangszugmittelscheibe ins Schnelle zu übersetzen. Hierbei können beispielsweise Übersetzungsverhältnisse 1 zu 1-1,5 eingesetzt werden. Auch hierbei kann allerdings mit der erfindungsgemäßen Zugmittelgetriebeeinheit der Pedalkickback vollständig oder zumindest annähernd vollständig vermieden werden, sodass er in der Praxis keine Rolle mehr spielt. Um eine Übersetzung ins Schnelle zur Ausgangszugmittelscheibe hin zu realisieren, muss die Zähnezahl beziehungsweise der Durchmesser der Eingangszugmittelscheibe größer sein als die Zähnezahl beziehungsweise der Durchmesser der Ausgangszugmittelscheibe. Um auch bei einer derartigen Übersetzung den Pedalkickback zu eliminieren oder zu reduzieren, hat sich gezeigt, dass die Zähnezahl beziehungsweise der Durchmesser der Übertragungszugmittelscheibeneinheit, also der Eingangszugmittelscheibe und der Ausgangszugmittelscheibe, zwischen der Zähnezahl beziehungsweise dem Durchmesser der Eingangszugmittelscheibe und der Ausgangszugmittelscheibe liegen sollte, was daher eine bevorzugte Ausführungsform der Erfindung bei einer Übersetzung ins Schnelle darstellt. Auf diese Weise gleicht die Übertragungszugmittelscheibeneinheit den von der Eingangszugmittelscheibe und der Ausgangszugmittelscheibe vorgegebenen Pedalkickback aus. Beispielsweise ist der Pedalkickback bei Zähnezahlen der Eingangszugmittelscheibe von 46, der Ausgangszugmittelscheibe von 36 und der Übertragungszugmittelscheibeneinheit von 40 auf nahezu Null reduziert.

Wesentlich ist in diesem Zusammenhang somit insbesondere, dass die Übertragungszugmittelscheibeneinheit ausschließlich über die erste Stützeinheit und die zweite Stützeinheit gelagert ist. Es ist somit insbesondere keine Befestigungsvorrichtung den der Übertragungsscheibeneinheit selbst oder im Bereich derselben vorgesehen, mit der eine starre Befestigung an einem Rahmen des Fahrzeugs erfolgen soll. Durch die ausschließliche Lagerung der Übertragungszugmittelscheibeneinheit über die erste und die zweite Stützeinheit wird sichergestellt, dass die Spannkräfte der Zugmittel auch tatsächlich von den Stützeinheiten aufgenommen werden, um die Zugkräfte der Zugmittel vollständig rückwirkungsfrei zwischen Drehmomenteingang und Drehmomentausgang, beispielsweise zwischen einer Pedalier- und/oder Motorachse und einer Vorder- oder Hinterachse, zu übertragen.

Um zum einen den Verschleiß der Zugmittel möglichst gering zu halten und zum anderen auch eine Verletzungsgefahr an den sich bewegenden Zugmitteln auszuschließen, ist es bevorzugt, wenn das Antriebszugmittel und das Abtriebszugmittel nach außen hin abgeschirmt beziehungsweise eingekapselt sind. Dazu ist bevorzugt ein Gehäuse vorgesehen, in dessen Innenraum die Zugmittel verlaufen. Die Aufgabe des Gehäuses liegt zunächst somit erst einmal darin, eine physische Barriere zu bilden, die das Zugmittel vor äußeren Einflüssen, wie beispielsweise Schmutz, schützt. Es ist bevorzugt, wenn das Gehäuse ortsfest zu den Stützeinheiten ausgebildet ist. Ideal ist es, wenn die erste Stützeinheit ein erstes Gehäuse und/oder die zweite Stützeinheit ein zweites Gehäuse aufweist, wobei das Gehäuse das Antriebszugmittel beziehungsweise das Abtriebszugmittel, insbesondere vollständig, durch das/die Gehäuse eingekapselt bzw. umschlossen wird, ggf. unter weitere Beteiligung einer oder mehrerer Zugmittelscheiben. Unter der erfindungsgemäßen Einkapselungen wird nicht notwendigerweise eine vollständige, beispielsweise luftdichte, Umhüllung der Zugmittel angesehen. Ein weiterer Vorteil der Nutzung eines Gehäuses ist, dass das Verletzungsrisiko deutlich gesenkt wird. Dazu ist es bevorzugt vorgesehen, dass das Gehäuse zumindest derart ausgebildet ist, dass es keine von einem Bediener mit einem Finger oder der Hand durchgreifbare Öffnungen aufweist. Besonders bevorzugt ist es, wenn das Gehäuse zumindest im Wesentlichen vollflächig, zumindest um das Zugmittel, ausgebildet ist. Hinsichtlich der Materialwahl kann auf verschiedene Varianten zurückgegriffen werden. Das erste und/oder das zweite Gehäuse sind allerdings zumindest bevorzugt aus Kunststoff hergestellt. Zwischen dem ersten Gehäuse und dem zweiten Gehäuse, die sich insbesondere bei einer Rotation der Stützeinheiten um die Übertragungszugmittelscheibeneinheit in Relation zueinander bewegen, können ein oder mehrere Dichtmittel vorgesehen sein, die auch bei einer Bewegung der Gehäuse zueinander eine vollständige Einkapselung der Zugmittel gewährleisten. Ein solches Dichtmittel kann beispielsweise ein elastisches Dichtelement und/oder eine Labyrinthdichtung oder ähnliches sein. Auch wenn die jeweiligen Gehäuse aus mehreren Teilen aufgebaut sind, können zwischen den Einzelteilen derartige Dichtmittel vorgesehen sein.

Das Gehäuse ist bevorzugt mehrteilig ausgebildet. Insbesondere kann es vorgesehen sein, dass das erste Gehäuse und/oder das zweite Gehäuse jeweils, insbesondere genau, zwei Gehäusehälften oder zwei Gehäuseschalen aufweist, die zueinander in einem Anlagebereich komplementär ausgebildet sind und zusammen den Aufnahmeinnenraum für insbesondere das Zugmittel bilden.

Grundsätzlich können die Stützeinheiten neben dem Gehäuse oder auch ohne das Gehäuse einen separaten Kraftaufnahmeteil aufweisen, der dazu ausgebildet ist, die Spannkräfte der Zugmittel aufzunehmen, beispielsweise ein Materialsteg oder ähnliches. Besonders bevorzugt ist allerdings, wenn auf einen derartigen zum Gehäuse separaten Kraftaufnahmeteil verzichtet wird. Es ist also bevorzugt, wenn die erste Stützeinheit, insbesondere vollständig, vom ersten Gehäuse selbst gebildet wird, sodass dieses erste Gehäuse dazu ausgebildet ist, die Spannkräfte des Antriebszugmittels, insbesondere vollständig, aufzunehmen. Ergänzend oder alternativ ist es bevorzugt vorgesehen, dass die zweite Stützeinheit, insbesondere vollständig, vom zweiten Gehäuse gebildet wird, so dass dieses zweite Gehäuse dazu ausgebildet ist, die Spannkräfte des Abtriebszugmittels, insbesondere vollständig, aufzunehmen. Ganz besonders bevorzugt nehmen das erste Gehäuse und das zweite Gehäuse die Spannkräfte des Antriebszugmittels und des Abtriebszugmittels vollständig auf. Ein separates Kraftaufnahmeteil ist daher nicht notwendig. In diesem Fall wird die jeweilige Stützeinheit vollständig vom jeweiligen Gehäuse gebildet. In diesem Fall erfüllt das Gehäuse somit eine Doppelfunktion und dient neben der Abschirmung der Zugmittel gleichzeitig zur Aufnahme der zur Spannung der Zugmittel erforderlichen Spannkräfte. In diesem Zusammenhang kann auch auf eine Kompositstruktur dahingehend zurückgegriffen werden, dass im Gehäuse zusätzliche Stützelemente eingearbeitet sind, um die für den Einsatz der Zugmittelgetriebeeinheit erforderlichen Spann- und Übertragungskräfte aufnehmen zu können.

Zur Einstellung der Vorspannung des Antriebszugmittels und des Abtriebszugmittels ist es vorgesehen, dass die Zugmittelgetriebeeinheit wenigstens einen Zugmittelspanner und insbesondere einen Zugmittelspanner pro Zugmittel aufweist. Erfindungsgemäß ist es vorgesehen, dass die erste Stützeinheit einen ersten Zugmittelspanner zum Vorspannen des Antriebszugmittels aufweist und/oder dass die zweite Stützeinheit einen zweiten Zugmittelspanner zum Vorspannen des Abtriebszugmittels aufweist. Die Spanneinheit ist erfindungsgemäß als Exzenterzugmittelspanner ausgebildet. Die jeweilige Stützeinheit weist also einen koaxial zur jeweiligen Zugmittelscheibe angeordneten exzentrisch geformten Ring auf, der über einen Vorspannzugang von außerhalb der Zugmittelgetriebeeinheit zugänglich ist. Durch eine Drehung dieses Exzenterzugmittelspanners wird der Abstand zwischen der Antriebszugmittelscheibe und der Eingangszugmittelscheibe beziehungsweise der Ausgangszugmittelscheibe und der Abtriebszugmittelscheibe verändert, insbesondere erhöht, wodurch das Antriebszugmittel beziehungsweise das Abtriebszugmittel vorgespannt wird. Der Zugmittelspanner der ersten Stützeinheit kann dabei beispielsweise an der Antriebszugmittelscheibe oder der Eingangszugmittelscheibe angeordnet sein. Der Zugmittelspanner der zweiten Stützeinheit kann beispielsweise an der Ausgangszugmittelscheibe oder der Abtriebszugmittelscheibe angeordnet sein.

Bevorzugt ist der Zugmittelspanner der ersten Stützeinheit an der Eingangszugmittelscheibe und der Zugmittelspanner der zweiten Stützeinheit an der Ausgangszugmittelscheibe angeordnet. Mit anderen Worten ist es bevorzugt, dass der erste und/oder der zweite Zugmittelspanner an der Übertragungszugmittelscheibeneinheit angeordnet sind. Wie bereits erwähnt, ist insbesondere wenigstens ein Vorspannzugang vorhanden, durch den hindurch der erste und/oder der zweite Zugmittelspanner zur Einstellung einer Vorspannposition von außen zugänglich sind. Besonders bevorzugt weist jeder Zugmittelspanner wenigstens einen derartigen Vorspannzugang auf. Über die Zugmittelspanner kann die Vorspannung der Zugmittel eingestellt werden, noch bevor die Zugmittelgetriebeeinheit am Fahrzeug montiert wird. Dies wird dadurch ermöglicht, dass die Zugmittelgetriebeeinheit die Stützeinheiten zur Aufnahme der Spannkräfte aufweist und nicht darauf angewiesen ist, die Spannkräfte in den Rahmen des Fahrzeuges einzuleiten. Dadurch wird es möglich, die Vorspannung der Zugmittel bereits werksseitig einzustellen, sodass ein Endverbraucher, selbst wenn er die Zugmittelgetriebeeinheit selbst an seinem Fahrzeug montiert, kein Spezialwerkzeug benötigt. Zudem sind keine speziellen Fachkenntnisse erforderlich.

Die genaue Anordnung der Zugmittelspanner ist wiederum variabel. Beispielsweise kann es vorgesehen sein, dass die Übertragungszugmittelscheibeneinheit über ein Drehlager, beispielsweise ein Wälzlager, an der ersten Stützeinheit beziehungsweise dem ersten Gehäuse und/oder der zweiten Stützeinheit beziehungsweise dem zweiten Gehäuse gelagert ist. Bevorzugt ist nun, dass der erste und/oder der zweite Zugmittelspanner innerhalb oder außerhalb dieses Drehlagers angeordnet sind. Innerhalb oder außerhalb bedeutet vorliegend auf der radial bezüglich der Übertragungsachse gesehen inneren Seite oder auf der radial bezüglich der Übertragungsachse gesehen äußeren Seite des Drehlagers. Bezüglich der Übertragungsachse von radial außen nach innen folgen also bevorzugt die Kontaktfläche der Eingangszugmittelscheibe oder der Ausgangszugmittelscheibe für das jeweilige Zugmittel, dann der Zugmittelspanner und dann das Drehlager aufeinander. Dies beschreibt die Anordnung des Zugmittelspanners außerhalb des Drehlagers. Alternativ folgen bezüglich der Übertragungsachse von radial außen nach innen bevorzugt die Kontaktfläche der Eingangszugmittelscheibe oder der Ausgangszugmittelscheibe für das jeweilige Zugmittel, dann das Drehlager und dann der Zugmittelspanner aufeinander. Dies beschreibt die Anordnung des Zugmittelspanners innerhalb des Drehlagers. Die beschriebenen Anordnungen des Zugmittelspanners haben jeweils für sich bauliche Vorteile, die je nach dem konkreten Anwendungsfall ausgewählt werden können.

Das Antriebszugmittel und/oder das Abtriebszugmittel ist erfindungsgemäß als Zahnriemen ausgebildet. Da erfindungsgemäß die Spannkräfte des Zugmittels von den Stützeinheiten aufgenommen werden, vermeidet die Erfindung die im Stand der Technik üblichen Schwierigkeiten, die mit der Aufbringung von hohen Spannkräften von Riemen einhergehen, denn dadurch, dass beispielsweise die vergleichsweise hohen Spannkräfte von der ersten und der zweiten Stützeinheit aufgenommen werden, sind keine speziellen Auslegungen des Rahmens an sich mehr erforderlich. Die Erfindung ermöglicht es daher, ohne die hiermit einhergehenden Nachteile, die Vorteile von Riemen, beispielsweise deren Langlebigkeit, zu nutzen.

Die Zugmittelgetriebeeinheit der Erfindung eignet sich ebenfalls dazu, eine Bremseinrichtung an dieser anzuordnen. So ist es bevorzugt vorgesehen, wenn eine Bremseinrichtung mit einem Bremssattel und einer Bremsscheibe vorhanden ist. Der Bremssattel und/oder die Bremsscheibe sind bevorzugt an der Zugmittelgetriebeeinheit angeordnet beziehungsweise gelagert, bilden mit dieser zusammen besonders bevorzugt ein zusammenhängendes Vormontagemodul. Insbesondere ist die Bremsscheibe koaxial mit der Antriebszugmittelscheibe oder der Abtriebszugmittelscheibe oder der Übertragungszugmittelscheibeneinheit angeordnet und insbesondere drehfest mit dieser verbunden. Die Bremsscheibe rotiert also mit der jeweiligen Zugmittelscheibe mit. Der Bremssattel dagegen ist bevorzugt am Gehäuse der Zugmittelgetriebeeinheit angeordnet beziehungsweise gelagert. Er steht also fest und kann zum Bremsen an die Bremsscheibe gepresst werden. Auf diese Weise werden beim Bremsen auftretende Lagerkräfte in die Lagerstruktur der Zugmittelgetriebeeinheit abgeleitet und beispielsweise ebenfalls nicht in den Rahmen. Darüber hinaus ermöglicht diese Anordnung ein deutlich erleichtertes Wartungskonzept, wie nachstehend noch näher ausgeführt werden wird.

Im Zusammenspiel mit einer in einer bevorzugten Ausführungsform am Fahrzeug vorhandenen Elektronik, beispielsweise einer Steuereinrichtung, kann die Zugmittelgetriebeeinheit der vorliegenden Erfindung noch weitere Funktionen übernehmen. Beispielsweise ist es bevorzugt, dass die Zugmittelgetriebeeinheit einen Geschwindigkeitssensor, insbesondere zur Bestimmung der Fahrgeschwindigkeit des Fahrzeuges umfasst. Hierbei kann es sich beispielsweise um einen Hall-Sensor handeln. Der Geschwindigkeitssensor ist insbesondere an der Antriebszugmittelscheibe oder der Abtriebszugmittelscheibe oder der Übertragungszugmittelscheibeneinheit angeordnet. Darüber hinaus kann die Zugmittelgetriebeeinheit beispielsweise einen Federwegsensor umfassen, der eine Rotation der Stützeinheiten zueinander, insbesondere um die Übertragungsachse, misst. Aus dieser Rotation kann auf eine Federbewegung des Hinterrads oder des Vorderrads zum Rahmen rückgeschlossen werden. Beispielsweise kann der Federwegsensor im Bereich der Übertragungszugmittelscheibeneinheit angeordnet sein und beispielsweise die Verschwenkung der beiden Stützeinheiten zueinander um die Übertragungszugmittelscheibeneinheit detektieren und hieraus auf einen Federweg zurückschließen. Alternativ kann beispielsweise eine Rotation der vorderen Stützeinheit relativ zum Rahmen oder relativ zum Motor ermittelt werden. Dies erlaubt eine besonders kompakte Bauform, denn der Sensor kann dann beispielsweise im Motor positioniert sein und die Lageerfassung kann beispielsweise über einen gegenüber dem Sensor rotierenden, d.h. insbesondere ortsfest an der vorderen Stützeinheit angeordneten, Magneten erfolgen. Es ist dann kein Kabel außerhalb des Motors erforderlich.

Sowohl der Geschwindigkeitssensor als auch der Federwegsensor können über ein Signalkabel oder auch kabellos mit einer Steuereinrichtung des Fahrzeuges in Signalverbindung stehen. Die Zugmittelgetriebeeinheit kann darüber hinaus ebenfalls einen elektrischen Generator zur Rückgewinnung von Antriebsenergie als elektrische Energie umfassen. Dieser kann zum einen in der Art eines Dynamos arbeiten, um elektrische Energie für den Betrieb von elektrischen Komponenten des Fahrzeuges aus der durch menschliche Muskelkraft eingebrachten Energie zu gewinnen.

Die vorliegende Erfindung bietet mehrere Möglichkeiten der Ausgestaltung der Zugmittelgetriebeeinheit im Bereich der Übertragungszugmittelscheibeneinheit. In einer bevorzugten Ausführungsform ist vorgesehen, dass die Übertragungszugmittelscheibeneinheit, und insbesondere auch die Gehäuse der Stützeinheiten, eine Durchgangsöffnung umfasst, die die Zugmittelgetriebeeinheit durchdringt und nach außen geöffnet ausgebildet ist. Die Durchgangsöffnung durchdringt die Zugmittelgetriebeeinheit also vollständig, sodass von der einen Seite auf die andere Seite hindurchgeblickt werden kann. Die Durchgangsöffnung ist dabei insbesondere koaxial zur Übertragungsachse und bevorzugt zylinderförmig entlang der Übertragungsachse ausgebildet. Die Durchgangsöffnung ist bevorzugt in Radialrichtung der Übertragungsachse nach außen von der Übertragungszugmittelscheibeneinheit und/oder einem Innengehäuse begrenzt, wobei das Innengehäuse bevorzugt drehfest mit der Übertragungszugmittelscheibeneinheit und mit dieser rotierbar ausgebildet ist. Durch die Durchgangsöffnung kann also von außen ein rotierendes Teil der Zugmittelgetriebeeinheit eingesehen werden, wenn das Fahrzeug sich fortbewegt. Ergänzend oder alternativ kann die Durchgangsöffnung in Radialrichtung der Übertragungsachse nach außen ebenfalls zumindest teilweise von einem oder beiden Gehäusen der Stützeinheiten begrenzt sein. Diese rotieren im Betrieb der Zugmittelgetriebeeinheit nicht, so dass keine rotierenden Teile nach außen sichtbar und zugänglich sind, was die Sicherheit des Fahrzeuges erhöht. Schließlich ist es ebenfalls möglich, dass die Durchgangsöffnung mit zu einem oder beiden Gehäusen der Stützeinheiten gehörenden Abdeckungen verschlossen ist. In einer bevorzugten Ausführungsform ist im Bereich der Durchgangsöffnung wenigstens eine Beleuchtungseinrichtung angeordnet, die insbesondere das Innengehäuse und/oder die Übertragungszugmittelscheibeneinheit und/oder die Abdeckung beleuchtet.

Von der erfindungsgemäßen Zugmittelgetriebeeinheit umfasst sind idealerweise somit auch zwei Anschlussflansche, konkret ein erster Anschlussflansch an der Antriebszugmittelscheibe oder in drehfester Lage mit dieser und ein zweiter Anschlussflansch an der Abtriebszugmittelscheibe oder in drehfester Lage mit dieser. Über diese beiden Anschlussflansche erfolgt, beispielsweise über Schraub- und/oder Klemmverbindungen, die Getriebeanbindung an oder in einen Antriebsstrang eines, insbesondere erfindungsgemäßen, Fahrzeugs.

Die Erfindung betrifft weiterhin ein Fahrzeug mit einer vorstehend beschriebenen erfindungsgemäßen Zugmittelgetriebeeinheit. Sämtliche vorstehend beschriebenen Merkmale, Wirkungen und Vorteile der erfindungsgemäßen Zugmittelgetriebeeinheit gelten im übertragenen Sinne ebenfalls für das erfindungsgemäße Fahrzeug und umgekehrt. Es wird lediglich zur Vermeidung von Wiederholungen auf die jeweils anderen Ausführungen Bezug genommen.

Für ein ein- oder mehrspuriges Fahrzeug, insbesondere Fahrrad, Pedelec, E-Bike oder Fahrrad mit Hilfsantrieb, der gattungsgemäßen Art, also konkret umfassend ein Vorderrad und wenigstens ein Hinterrad, die über einen Rahmen miteinander verbunden sind, wobei das Vorderrad um eine Vorderradachse und das Hinterrad um eine Hinterradachse rotierbar gelagert sind, und eine Zugmittelgetriebeeinheit mit wenigstens zwei, ganz besonders wenigstens zwei in Reihe zueinander angeordneten, Zugmitteln, insbesondere einer erfindungsgemäßen Zugmittelgetriebeeinheit, ist es erfindungsgemäß nun vorgesehen, dass die Zugmittelgetriebeeinheit derart ausgebildet ist, dass sie vollständig entkoppelt vom Rahmen Spannkräfte der wenigstens zwei Zugmittel aufnimmt und in die Zugmittelgetriebeeinheit über eine Antriebszugmittelscheibe eingeleitete Drehmomentkräfte isoliert vom Rahmen an die Abtriebszugmittelscheibe überträgt. Anders, als bisher im Stand der Technik üblich, erfolgt auf diese Weise somit eine Entkoppelung des Rahmens von Spannkräften für das Zugmittel, was insbesondere den Montageprozess, wie nachstehend noch näher beschrieben, deutlich erleichtert. Gleichzeitig ermöglicht diese Anordnung, dass Zugmittelkräfte nicht mehr wie bei einem konventionellen Kettenantrieb horizontal auf die Hinter- oder Vorderachse wirken, was letztlich eine Entkopplung zwischen Antrieb und Federung ermöglicht. Dieser Grundansatz ermöglicht es, die wechselseitige Beeinflussung zwischen Antrieb und Federung (Antisquat) unabhängig von einer konkreten Übersetzung zu gestalten, weil die Zugmittelkräfte entkoppelt nicht horizontal auf die Hinterachse wirken. Letztlich wird auf die erfindungsgemäße Weise somit eine Interaktion zwischen Antriebskräften und Federung eliminiert, was wiederum die Optimierung des Antisquat-Verhaltens unabhängig vom Antrieb ermöglicht.

Bei einem eingangs genannten gattungsgemäßen Fahrzeug gelingt die Lösung der Aufgabe somit mit anderen Worten auch konkret dadurch, dass eine die Antriebszugmittelscheibe und die Eingangszugmittelscheibe lagernde erste Stützeinheit zur Aufnahme von Spannkräften des Antriebszugmittels unabhängig vom Rahmen vorhanden ist, und dass eine die Ausgangszugmittelscheibe und die Abtriebszugmittelscheibe lagernde zweite Stützeinheit zur Aufnahme von Spannkräften des Abtriebszugmittels unabhängig vom Rahmen vorhanden ist. Unter dem Rahmen des Fahrzeugs werden vorliegend sämtliche Teile des Fahrzeuges verstanden, die eine Tragstruktur beispielsweise für das oder die Vorderräder, das oder die Hinterräder, einen Sattel und einen Lenker bilden. Typische Rahmenteile gemäß dieser Definition am Beispiel eines Fahrrads sind daher beispielsweise Oberrohr, Unterrohr, Sattelrohr, Vordergabel und/oder Hinterradstrebe beziehungsweise Hinterradschwinge. Eine solche Struktur wird gemeinhin speziell für Fahrräder auch als Fahrradrahmen bezeichnet. Derartige Rahmen können teilweise gefederte Elemente mit umfassen. So ist es für Fahrräder beispielsweise bekannt, die Rahmenstruktur zum Hinterrad über die Hinterradstrebe starr gegenüber der übrigen Rahmenstruktur ("Hauptrahmen") auszubilden ("Hardtail") oder dieses gefedert an der übrigen Rahmenstruktur über eine Hinterradschwinge zu lagern ("Fully"). Auch die Federung des Sattels und/oder des Vorderrades ist bekannt. Die vorliegende Erfindung kann bei allen bekannten Bauweisen des Hinterbaus eines Fahrzeugs beziehungsweise Fahrrades Anwendung finden, beispielsweise bei Eingelenker, Horstlink, VPP (virtual pivot point), Flexhinterbau, Splitpivot und andere. Derartige Systeme sind beispielsweise in US8733774B2, US5899480A, US10106221B2, WO2020154800A1 und US7828314B2 beschrieben. Wesentlich ist nun, dass gegenüber diesem konventionellen Rahmenaufbau erfindungsgemäß nun zwei weitere und gegenüber dem Rahmen zusätzliche Elemente vorgesehen sind, deren primäre Aufgabe in der Aufnahme von Spannkräften für das Antriebs- und das Abtriebszugmittel liegen. Diese Elemente sind vorliegend die erste und die zweite Stützeinheit. Die erste Stützeinheit und die zweite Stützeinheit sind gegeneinander beziehungsweise relativ zueinander und insbesondere um die Übertragungszugmittelscheibeneinheit drehbar ausgebildet. Darüber hinaus sind die erste Stützeinheit und die zweite Stützeinheit drehbar am Rahmen gelagert. Ferner ist es bevorzugt vorgesehen, dass die Übertragungszugmittelscheibeneinheit ausschließlich über die erste Stützeinheit und die zweite Stützeinheit gelagert ist. Durch die Drehbarkeit der Stützeinheiten gegenüber dem Rahmen beziehungsweise die ausschließliche Lagerung der Übertragungszugmittelscheibeneinheit über die erste und die zweite Stützeinheit wird sichergestellt, dass die Spannkräfte der Zugmittel auch tatsächlich von den Stützeinheiten aufgenommen werden, um die Zugkräfte der Zugmittel vollständig rückwirkungsfrei auf die Hinterachse zu entkoppeln. Damit wird ein antriebsunabhängiges Verhalten der Hinterradfederung ermöglicht, um beispielsweise Antisquat zu optimieren. Beispielsweise ist die Zugmittelgetriebeeinheit also am Rahmen ausschließlich im Bereich der Antriebszugmittelscheibe und der Abtriebszugmittelscheibe gelagert. Dieser Bereich der Antriebszugmittelscheibe und der Abtriebszugmittelscheibe beschreibt dabei insbesondere denjenigen Abschnitt der jeweiligen Stützeinheit, in dem die jeweilige Zugmittelscheibe tatsächlich vorhanden ist. Der jeweilige Bereich erstreckt sich also über die räumlichen Ausmaße der Zugmittelscheiben hinweg und endet mit diesen. Die beiden Stützeinheiten sind also an ihren entfernt voneinander angeordneten Enden am Rahmen gelagert. An den diesen gegenüberliegenden Enden wiederum sind die Stützeinheiten über die Übertragungszugmittelscheibeneinheit miteinander drehbar verbunden. Insgesamt bilden die beiden Stützeinheiten daher in der Art eines Kniehebels verbundene Schwenkarme, dessen Knickstelle in der Drehachse der Übertragungsmittelscheibeneinheit liegt. Um auch im Betrieb des Fahrzeugs eine möglichst große Bewegbarkeit der Zugmittelgetriebeeinheit und insbesondere der Antriebszugmittelscheibe relativ zur Abtriebszugmittelscheibe zu gewährleisten, ist die Zugmittelgetriebeeinheit im Bereich der Übertragungszugmittelscheibeneinheit somit nicht direkt am Rahmen gelagert, sondern insbesondere relativ zu diesem verstellbar. Die Übertragungszugmittelscheibeneinheit ist daher gegenüber dem Rahmen frei schwebend ausgebildet. Sie ist insbesondere relativ zum Rahmen bewegbar ausgebildet. Die hieraus resultierende Flexibilität erleichtert die Montage und bringt weitere Vorteile im Betrieb nach sich, die nachstehend noch näher erläutert werden. Durch diese Konstruktion ist erfindungsgemäß realisiert, dass der Rahmen im Betrieb des Fahrzeugs auftretende Radaufstandskräfte unter Umgehung der ersten Stützeinheit und der zweiten Stützeinheit aufnimmt. Radaufstandskräfte bezeichnen vorliegend sämtliche vertikal und/oder horizontal wirkenden Kräfte, die vom Boden über wenigstens ein Rad in das Fahrzeug und insbesondere den Rahmen eingebracht werden. Hierunter werden beispielsweise Kräfte verstanden, die auftretenden Gewichtskräften oder Rollwiderstandskräften entgegenwirken. Darüber hinaus können hierunter auch Trag- und/oder Dämpfungskräfte sowie Kräfte aus der Fahrdynamik im Fahr- und Antriebsbetrieb des Fahrzeugs fallen. Die Radaufstandskräfte werden ausschließlich vom Rahmen aufgenommen beziehungsweise wirken ausschließlich an diesem. Sie wirken daher nicht auf die Stützeinheiten beziehungsweise die Zugmittelgetriebeeinheit. Die Stützeinheiten beziehungsweise die Zugmittelgetriebeeinheit werden bei der Kraftaufnahme durch den Rahmen umgangen. Dies bedeutet, dass die Radaufstandskräfte, insbesondere am Rahmen, genau gleich wirken würden, wenn die Zugmittelgetriebeeinheit vom Fahrzeug demontiert wäre. Die Zugmittelgetriebeeinheit beziehungsweise deren An- oder Abwesenheit am Fahrzeug nimmt das keinen Einfluss auf das Wirken der Kräfte.

Grundsätzlich können die Stützeinheiten an beliebigen Punkten des Rahmens des Fahrzeuges befestigt bzw. gelagert werden. Bevorzugt sind die Stützeinheiten drehbar gegenüber und zumindest mittelbar am Rahmen gelagert, beispielsweise über einen Anschluss an einer oder mehrere Wellen des Antriebs oder des Hinter- oder Vorderrades. Der Anschluss kann insbesondere ein oder mehrere Wälzlager umfassen, um auch im montierten Zustand der Zugmittelgetriebeeinheit eine relative Verstellbarkeit derselben zum Rahmen zu ermöglichen. Die Drehachsen der Stützeinheiten am Rahmen müssen dabei jedoch nicht zwingend mit der Antriebsachse oder der Vorderradachse oder der Hinterradachse des Fahrzeuges zusammenfallen. Die Antriebsachse des Fahrzeugs beschreibt dabei diejenige Rotationsachse, um die eine von Pedalen und/oder einem Antriebsmotor angetriebene Welle des Fahrzeuges rotiert. Dies kann beispielsweise die Rotationsachse der Pedalkurbelwelle sein und/oder die Rotationsachse einer Ausgangswelle eines Antriebsmotors beziehungsweise einer Antriebseinheit. Insbesondere handelt es sich bei der Antriebsachse um die Rotationsachse einer Antriebswelle einer Antriebseinheit, die mit der aus einer Kombination von menschlicher Muskelkraft und wenigstens einem Antriebsmotor resultierenden Antriebsenergie beaufschlagt ist. Gemäß einer bevorzugten Ausführungsform ist die erste Stützeinheit um die Antriebsachse des Fahrzeugs drehbar bzw. schwenkbar am Rahmen gelagert. Die Schwenkbarkeit bezeichnet dabei eine Bewegbarkeit um diese Achse, wobei die Bewegbarkeit allerdings nicht vollständig umlaufend sein muss, sondern auch nur einen gewissen Winkelbereich betreffen kann. Die erste Stützeinheit sitzt also beispielsweise auf der Pedalkurbelwelle und/oder auf einer Antriebswelle eines Antriebsmotors beziehungsweise einer Antriebsmotoreinheit. Ergänzend oder alternativ ist bevorzugt vorgesehen, dass die zweite Stützeinheit um die Hinterradachse oder die Vorderradachse des Fahrzeugs drehbar am Rahmen gelagert ist. Die zweite Stützeinheit ist dabei an demjenigen Rad gelagert, welches über die Zugmittelgetriebeeinheit angetrieben werden soll. Dies kann das Vorder- oder das Hinterrad sein. Besonders bevorzugt ist es, wenn die Zugmittelgetriebeeinheit ausschließlich über diese Lager am Rahmen gelagert ist. Die Zugmittelgetriebeeinheit ist also ausschließlich über die drehbare Lagerung der ersten Stützeinheit um die Antriebsachse des Fahrzeuges und um die drehbare Lagerung der zweiten Stützeinheit um die Hinterradachse oder die Vorderradachse am Rahmen gelagert. Insbesondere ist die Zugmittelgetriebeeinheit an der Verbindungsstelle zwischen der ersten Stützeinheit und der zweiten Stützeinheit, an der ebenfalls die Übertragungszugmittelscheibeneinheit angeordnet ist, nicht mit dem Rahmen verbunden, sondern freischwebend beziehungsweise gegenüber dem Rahmen beweglich ausgebildet. Durch die entsprechende Anordnung der Stützeinheiten ergibt sich eine besonders einfache Übertragung der Antriebsenergie von den Pedalen beziehungsweise einer Antriebsmotoreinheit auf die Zugmittelgetriebeeinheit und von dieser auf das angetriebene Rad, sei es das Vorder- oder das Hinterrad. Wesentlich ist in diesem Zusammenhang, dass aufgrund dieses Aufbaus die Zugkraft der Zugmittel nicht auf die Achsen von Vorder- oder Hinterrad wirken. Damit wird eine Interaktion zwischen Antriebskräften und Federung eliminiert, was wiederum die Optimierung des Antisquat-Verhaltens unabhängig vom Antrieb ermöglicht.

Ganz besonders einfach kann die Antriebsenergie dann übertragen werden, wenn gemäß einer bevorzugten Ausführungsform die Antriebszugmittelscheibe koaxial zur Antriebsachse des Fahrzeugs angeordnet ist und/oder die Abtriebszugmittelscheibe koaxial zur Hinterradachse oder der Vorderradachse des Fahrzeugs angeordnet ist. Die Antriebszugmittelscheibe rotiert also um dieselbe Rotationsachse wie eine Antriebswelle einer Antriebseinheit, die insbesondere mit einer Kombination aus menschlicher Muskelkraft und einem Antriebsmotor angetrieben werden kann. Die Abtriebszugmittelscheibe rotiert dagegen um dieselbe Rotationsachse wie das insgesamt von der Zugmittelgetriebeeinheit angetriebene Rad. Die Zugmittelgetriebeeinheit überträgt also insgesamt die Antriebsenergie von der Antriebswelle auf das jeweils angetriebene Rad, beispielsweise das Hinterrad oder das Vorderrad.

Wie bereits erwähnt, realisiert die Übertragungsachse sozusagen das Knie zwischen den beiden Stützeinheiten. Um nun über dieses Knie beziehungsweise über die relative Verschwenkbarkeit der Stützeinheiten zueinander um die Übertragungsachse einen möglichst großen Spielraum zum Ausgleich von Abstandsänderungen zwischen der Antriebszugmittelscheibe und der Abtriebszugmittelscheibe zu gewährleisten, ist es besonders bevorzugt vorgesehen, dass die Übertragungsachse vertikal über oder unter der Antriebsachse und/oder der Hinterradachse beziehungsweise der Vorderradachse des Fahrzeugs angeordnet ist. Bei einer Anordnung der Übertragungsachse vertikal über den genannten Achsen wird gleichzeitig erreicht, dass die Zugmittelgetriebeeinheit besonders weit vom Boden, beispielsweise einer Fahrbahn, entfernt und daher gegen Kollisionen mit Hindernissen geschützt ist.

Bei herkömmlichen Fahrzeugen mit gefedertem angetriebenem Rad, beispielsweise Vorderrad oder Hinterrad, gibt es einen Effekt, der als Pedalrückschlag oder Pedalkickback bezeichnet wird. Dieser beschreibt, dass es bei jedem Einfedervorgang der Federung automatisch über die Zugmittel zu einer Drehung der Antriebswelle, und dadurch beispielsweise ebenfalls der Tretkurbelwelle, kommt. Hierdurch werden ebenfalls die Pedale gedreht, was neben einer unangenehmen Wahrnehmung durch den Fahrer zudem zu einer Beeinträchtigung des Federverhaltens führt. Das Auftreten dieses Effektes lässt sich mit der erfindungsgemäßen Zugmittelgetriebeeinheit vermeiden, denn dadurch, dass die Übertragungszugmittelscheibeneinheit relativ zum Rahmen bewegbar ist, kann sie Abstandsänderungen zwischen der Antriebsachse und der Hinterradachse ausgleichen, ohne dabei die Stellposition der Zugmittel zu verändern. Unabhängig davon gelingt dieser Ausgleich insbesondere dann besonders gut, wenn die Zugmittelgetriebeeinheit mit einer Antriebseinheit kombiniert wird, die bereits eine Gangschaltung in sich realisiert, sodass am angetriebenen Rad, beispielsweise am Hinterrad, keine Gangschaltung mehr vorhanden sein muss.

Bei gattungsgemäßen Fahrzeugen ist es regelmäßig vorteilhaft, wenn diese, insbesondere im Bereich des Vorderrades und des Hinterrades, möglichst schmal bauen. Dies gilt ebenfalls für die erfindungsgemäße Zugmittelgetriebeeinheit. Es ist daher in einer bevorzugten Ausführungsform der Erfindung vorgesehen, dass die zweite Stützeinheit gegenüber der ersten Stützeinheit in Richtung der Hinterradachse oder der Vorderradachse zur Fahrzeugmitte hin versetzt angeordnet ist. Insbesondere ist ebenfalls die Abtriebszugmittelscheibe gegenüber der Antriebszugmittelscheibe in Richtung der Hinterradachse oder der Vorderradachse zur Fahrzeugmitte hin versetzt angeordnet. Dasselbe gilt ebenfalls für das Abtriebszugmittel gegenüber dem Antriebszugmittel. Auf diese Weise ist die erste Stützeinheit in demjenigen Bereich weiter von der Fahrzeugmitte nach außen versetzt, in dem sowieso Bauraum für eine Antriebseinheit, beispielsweise umfassend einen Antriebsmotor, an der Antriebswelle benötigt wird, während die Verlagerung der zweiten Stützeinheit zur Fahrzeugmitte hin im Bereich des angetriebenen Rades für die hier gewünschte schmale Bauweise sorgt. Die Fahrzeugmitte bezieht sich bei dieser Betrachtung auf eine virtuelle, in Längsrichtung des Fahrzeugs sowie in Vertikalrichtung verlaufende Mittelebene, die senkrecht hierzu zu beiden maximalen Außenseiten bzw. Außenpunkten des Fahrzeugs den gleichen Abstand aufweist.

Aufgrund des Abstandes des Zugmittels, beispielsweise der Kette, zum Hinterrad, der typischerweise durch das Vorhandensein einer Gangschaltungskassette am Hinterrad vorgegeben wird, müssen bei konventionellen Fahrzeugen, beispielsweise Fahrrädern, die Speichen der Hinterräder asymmetrisch angeordnet werden. Hieraus ergeben sich dann allerdings unterschiedliche Belastungen der Speichen, was deren Lebensdauer insgesamt verringert. Es ist daher bevorzugt, dass das Hinterrad und/oder das Vorderrad einen um eine Symmetrieachse symmetrischen Satz Speichen aufweist. Die Speichen sind dabei symmetrisch am Hinterrad und/oder am Vorderrad angeordnet. Die Symmetrieachse der Speichen entspricht daher ebenfalls der Symmetrieachse der Felge und des Reifens des jeweiligen Rades. Ermöglicht wird die symmetrische Anordnung dadurch, dass die zweite Stützeinheit und insbesondere die Abtriebszugmittelscheibe bei der Erfindung deutlich näher an die Symmetrieachse des Rades herangerückt ist als dies bei einer konventionellen Anordnung mit einer Kassette möglich ist.

In einer Ausführungsform der vorliegenden Erfindung ist das Hinterrad mit wenigstens einer zum Rahmen gehörenden Hinterradstrebe beziehungsweise Hinterradschwinge verbunden. Beispielsweise ist das Hinterrad über die Hinterradstrebe mit dem Sattelrohr verbunden. Es kann nun vorgesehen sein, dass die Hinterradstrebe um ein Strebenlager drehbar mit dem restlichen Rahmen, insbesondere dem Sattelrohr, verbunden ist. Die Drehbarkeit der Hinterradstrebe um das Strebenlager ermöglicht eine Federung des Hinterrades gegenüber dem Rahmen beziehungsweise dem Sattelrohr. Es ist nun vorteilhaft, wenn das Hinterrad, insbesondere mittelbar über die Hinterradstrebe, über einen Dämpfer gefedert am Rahmen, beispielsweise dem Sattelrohr und/oder dem Oberrohr beziehungsweise dem Unterrohr, gelagert ist. Um zu vermeiden, dass die Hinterradstrebe und die Zugmittelgetriebeeinheit sich gegeneinander im Weg umgehen und um gleichzeitig eine schmale Bauweise am Hinterrad zu ermöglichen, ist es bevorzugt, dass die Hinterradstrebe vom Hinterrad kommend in Vertikalrichtung nach oben gebogen ausgebildet ist, sodass sie die Zugmittelgetriebeeinheit bogenartig übergreift bzw. überspannt, insbesondere in Vertikalrichtung oberhalb der Zugmittelgetriebeeinheit. Die gebogene Hinterradstrebe ist also bevorzugt in einem nach oben geführten Bogen über der Zugmittelgetriebeeinheit ausgeführt. Dadurch wird in Vertikalrichtung unterhalb dieses Bogens ein Bauraum erhalten, der zur Aufnahme der Zugmittelgetriebeeinheit, insbesondere die Übertragungsmittelscheibeneinheit, nutzbar ist. Diese Anordnung ermöglicht es, insgesamt einerseits einen vergleichsweise großen Freiraum vom Boden in Vertikalrichtung nach oben zu erhalten, was insbesondere bei Fahrten im Gelände von Vorteil ist. Andererseits kann ein großzügiger Federweg zur Verfügung gestellt werden, ohne dass Komponenten der Zugmittelgetriebeeinheit an Teile des Rahmens anschlagen. Das Strebenlager, an dem die Hinterradstrebe mit dem restlichen Rahmen schwenkbar verbunden ist, ist bevorzugt versetzt zur rahmenseitigen Drehachse, beispielsweise der Antriebsachse, der ersten Stützeinheit angeordnet. Besonders bevorzugt ist das Strebenlager vertikal über der rahmenseitigen Drehachse, beispielsweise der Antriebsachse oder der Kurbelwelle, der ersten Stützeinheit angeordnet. Die entsprechende Ausgestaltung erfüllt sämtliche Anforderungen an eine moderne Rahmengestaltung eines gattungsgemäßen Fahrzeugs.

Wie vorstehend bereits angedeutet, ist es vorteilhaft, wenn die Zugmittelgetriebeeinheit als separates und in sich zusammenhängendes Modul ausgebildet ist, welches beispielsweise bereits werkseitig mit der Vorspannung der Zugmittel versehen werden kann und dann vom Endverbraucher oder Hersteller lediglich als zusammenhängende Gesamtheit am Fahrzeug, insbesondere in einem Schritt, montiert wird. Besonders bevorzugt umfasst dieses Modul ebenfalls die Bremseinrichtung oder zumindest Teile davon. Gemäß dieser bevorzugten Ausführungsform ist also vorgesehen, dass die Zugmittelgetriebeeinheit modular als zusammenhängend vom Fahrzeug abnehmbare beziehungsweise am Fahrzeug montierbare Konstruktionseinheit mit der Bremsscheibe und/oder dem Bremssattel ausgebildet ist. Es versteht sich, dass dann geeignete Anschlussstellen für Bremsbetätigungseinrichtungen, wie beispielsweise Bowdenzüge oder hydraulisch betätigte Mittel, vorgesehen sein können. Hierbei ist insbesondere vorgesehen, dass die Konstruktionseinheit derart ausgebildet ist, dass das Antriebszugmittel und/oder das Abtriebszugmittel unabhängig vom Fahrzeug und damit insbesondere im vom Fahrzeug demontierten Zustand einsatzfertig vorspannbar sind. Dies wird ebenfalls wieder dadurch ermöglicht, dass die Stützeinheiten der Zugmittelgetriebeeinheit selbst die Spannkräfte der Zugmittel aufnehmen, ohne hierfür den Rahmen des Fahrzeuges zu benötigen. Um dies möglichst praktikabel zu erreichen, kann die Zugmittelgetriebeeinheit Anschlussstellen aufweisen, insbesondere eine Anschlussstelle zum Anschluss der Antriebszugmittelscheibe an die Antriebswelle des Fahrzeuges und eine Anschlussstelle zum Anschluss der Abtriebszugmittelscheibe an das angetriebene Rad, beispielsweise das Hinterrad oder das Vorderrad. Zur Montage der modularen Zugmittelgetriebeeinheit müssen dann lediglich diese Anschlussstellen mit der Antriebswelle und dem angetriebenen Rad beziehungsweise dessen Nabenkörper, insbesondere drehfest, ganz besonders zumindest in eine Umlaufrichtung drehfest, verbunden werden. Hierbei kann es sich um an sich aus dem Stand der Technik bekannte Anschlusseinrichtungen zur Verbindung einer Zugmittelrolle mit einer Achse oder einer sich um eine Achse drehenden Einheit handeln, wie beispielsweise eine Kupplungseinrichtung, insbesondere eine Formschlusskupplung. Durch die Drehbarkeit der beiden Stützeinheiten zueinander um die Übertragungszugmittelscheibeneinheit ist diese Montage besonders einfach, da dieselbe modulare Zugmittelgetriebeeinheit unterschiedliche Abstände der Antriebswelle zum angetriebenen Rad über ein Verdrehen der Stützeinheiten ausgleichen kann. Dies lässt beispielsweise erheblich mehr Raum für Fertigungstoleranzen.

Wie genau die Anschlussstelle zur Verbindung der Abtriebszugmittelscheibe an das angetriebene Rad realisiert wird, kann grundsätzlich variieren. Beispielsweise könnte hier ein Reibschluss beziehungsweise ein Kraftschluss genutzt werden. Besonders bevorzugt ist es, wenn die Abtriebszugmittelscheibe über einen axial lösbaren und in Umlaufrichtung wirkenden Formschluss, der insbesondere als Stirnverzahnung ausgebildet ist, mit einem Hinterradnabenkörper oder einem Vorderradnabenkörper verbunden ist. Die axiale Richtung bezieht sich hierbei insbesondere auf die Richtung der jeweiligen Radachse, also beispielsweise der Hinterradachse oder der Vorderradachse. Die axiale Lösbarkeit des Formschlusses ermöglicht eine leichte Montage über eine bereits üblicherweise beim angetriebenen Rad verwendete Steckachse. Der Formschluss in Umlaufrichtung wiederum sorgt für eine sichere und effiziente Übertragung der Antriebsenergie von der Abtriebszugmittelscheibe auf den Hinterradnabenkörper und damit auf das Hinterrad oder auf den Vorderradnabenkörper und damit auf das Vorderrad.

Mit der Zugmittelgetriebeeinheit gemäß der vorliegenden Erfindung lässt sich ebenfalls der Wechsel des angetriebenen Rades vereinfachen. Hierfür ist insbesondere vorgesehen, dass die Zugmittelgetriebeeinheit am Rahmen des Fahrzeugs verbleibt, wenn das angetriebene Rad vom Rahmen demontiert worden ist. Hierfür ist es bevorzugt vorgesehen, dass der Hinterradnabenkörper und/oder der Vorderradnabenkörper über den Formschluss von der Abtriebszugmittelscheibe derart demontierbar ausgebildet ist, dass der Hinterradnabenkörper und/oder der Vorderradnabenkörper zusammen mit dem Hinterrad beziehungsweise dem Vorderrad vom Fahrzeug demontierbar ist, während die Zugmittelgetriebeeinheit mit der Abtriebszugmittelscheibe, und insbesondere der Bremsscheibe und/oder dem Bremssattel, am Rahmen verbleibt. Hierfür ist die Zugmittelgetriebeeinheit beispielsweise über eine Lagerhülse am Rahmen des Fahrzeuges, beispielsweise an einer Hinterradstrebe, gelagert. Die Lagerhülse ist insbesondere rahmenfest ausgebildet und kann ebenfalls den Hinterradachskörper aufnehmen. Auch die Lagerhülse verbleibt bei einem demontierten angetriebenen Rad am Rahmen. Um das angetriebene Rad zu wechseln, muss ein Bediener also lediglich die Steckachse aus dem Nabenkörper herausziehen und den Formschluss zwischen dem Nabenkörper und der Abtriebszugmittelscheibe in axialer Richtung der Hinterradachse beziehungsweise der Vorderradachse lösen. Sodann kann das angetriebene Rad vom Rahmen entfernt werden, während die Zugmittelgetriebeeinheit an diesem verbleibt. Insbesondere ist die Zugmittelgetriebeeinheit weiter über die Lagerhülse an der Hinterradstrebe gelagert. Der Bediener muss daher für den Wechsel des angetriebenen Rades überhaupt keine Arbeiten an der Zugmittelgetriebeeinheit durchführen. Insbesondere muss der Bediener weder die Vorspannung der Zugmittel lösen noch die Zugmittel von ihren Zugmittelscheiben entfernen. Der Wechsel des angetriebenen Rades gelingt daher deutlich einfacher und schneller als bei konventionellen Fahrzeugen.

Die Lösung der eingangs genannten Aufgabe gelingt ebenfalls mit den erfindungsgemäßen Verfahren, unter anderem einem Verfahren zum Montieren eines Fahrzeugs, insbesondere eines Fahrzeugs gemäß den vorhergehenden Ausführungen. Die Erfindung ermöglicht ferner ein Verfahren zum Vermeiden von Pedalkickback bei einem Fahrzeug, insbesondere einem Fahrzeug gemäß den vorstehenden Ausführungen, und/oder einem gemäß dem Verfahren zum Montieren eines Fahrzeugs montierten Fahrzeugs. Sämtliche vorstehend für die Zugmittelgetriebeeinheit und/oder das Fahrzeug erläuterten Merkmale, Wirkungen und Vorteile gelten im übertragenen Sinn ebenfalls für die erfindungsgemäßen Verfahren und umgekehrt. Dasselbe gilt für die erfindungsgemäßen Verfahren untereinander. Es wird lediglich zur Vermeidung von Wiederholungen auf die jeweils anderen Ausführungen Bezug genommen.

Wie bereits angesprochen, gelingt die Lösung der eingangs genannten Aufgabe mit einem Verfahren zum Montieren eines Fahrzeugs, wobei das Fahrzeug eine modulare Zugmittelgetriebeeinheit, insbesondere eine Zugmittelgetriebeeinheit gemäß den vorhergehenden Ausführungen, mit einer ersten Stützeinheit mit einem Antriebszugmittel und einer zweiten Stützeinheit mit einem Abtriebszugmittel aufweist, wobei die beiden Stützeinheiten gelenkig miteinander verbunden und um eine gemeinsame Übertragungsachse gegeneinander verschwenkbar sind, umfassend die Schritte: Vorspannen des Antriebszugmittels und des Abtriebszugmittels in der Zugmittelgetriebeeinheit, wobei die Vorspannkräfte des Antriebszugmittels und des Abtriebszugmittels ausschließlich von den Stützeinheiten aufgenommen werden, Einsetzen der modularen Zugmittelgetriebeeinheit am Fahrzeug und Ausgleichen von Toleranzen durch ein Verschwenken der Stützeinheiten um die Übertragungsachse. Dadurch, dass die Vorspannung der Zugmittel bereits werksseitig eingestellt werden kann, muss ein Endverbraucher sich mit der Vorspannung überhaupt nicht beschäftigen. Es ist daher zur Montage des Fahrzeuges auch kein Spezialwerkzeug zur Einstellung der hohen Zugspannungen nötig, die beispielsweise beim Einsatz von Riemen als Zugmittel notwendig sind. Durch die Kompensation verschiedener Abstände zwischen den Montagepunkten der Zugmittelgetriebeeinheit über ein Verschwenken der Stützeinheiten gegeneinander wird die Montage weiter vereinfacht und mit ein und derselben Zugmittelgetriebeeinheit für eine Vielzahl unterschiedlicher Bauformen von Fahrzeugen beziehungsweise Fahrzeugrahmen ermöglicht. Es kann zudem vorgesehen sein, dass die Zugmittelgetriebeeinheit gleichzeitig auch eine Bremseinrichtung oder zumindest Teile davon, wie beispielsweise eine Bremsscheibe und/oder einen Bremssattel, und/oder weitere Elemente, insbesondere Funktionselemente, trägt, wie beispielsweise integrierte Kabelverbindungen, einen oder mehrere Sensoren etc. Diese können dann zusammen mit der übrigen Zugmittelgetriebeeinheit vormontiert und als zusammenhängendes Modul gleichzeitig in einem Fahrzeug der erfindungsgemäßen Art installiert werden.

Die Erfindung ermöglicht ein Verfahren zum Vermeiden von Pedalkickback bei einem Fahrzeug, wobei das, insbesondere erfindungsgemäß ausgebildete, Fahrzeug einen Rahmen, ein gefedertes Hinterrad oder ein gefedertes Vorderrad und eine modulare Zugmittelgetriebeeinheit, insbesondere eine Zugmittelgetriebeeinheit gemäß den vorhergehenden Ausführungen, mit einer erste Stützeinheit mit einem Antriebszugmittel und einer zweite Stützeinheit mit einem Abtriebszugmittel aufweist, wobei die beiden Stützeinheiten gelenkig miteinander verbunden und um eine gemeinsame Übertragungsachse gegeneinander verschwenkbar sind, und wobei die Zugmittelgetriebeeinheit Antriebsenergie von einer Antriebszugmittelscheibe auf eine Abtriebszugmittelscheibe überträgt, umfassend die Schritte: Einfedern des Hinterrades oder des Vorderrades und Ausgleichen einer durch die Federbewegung entstehenden Abstandsänderung zwischen der Antriebszugmittelscheibe und der Abtriebszugmittelscheibe durch ein Verschwenken der Stützeinheiten um die Übertragungsachse und ein gleichzeitiges Bewegen der Stützeinheiten, so dass sich die Übertragungsachse relativ zum Rahmen bewegt. Durch das erfindungsgemäße Ausgleichen der Abstandsänderung wird, wie vorstehend bereits erläutert, ein Pedalkickback unter Berücksichtigung der Zugmittelscheibendurchmesser vermieden, wodurch ein angenehmeres Fahrgefühl für einen Fahrer erreicht wird. Darüber hinaus wird hierdurch die Möglichkeit geschaffen, ein optimales Antisquat-Verhalten des Fahrwerks einzustellen.

Die Erfindung ermöglicht ferner ein Verfahren zum Übertragen eines Antriebsdrehmomentes eines, insbesondere erfindungsgemäß ausgebildeten, ein- oder mehrspurigen Fahrzeuges über eine Zugmittelgetriebeeinheit, insbesondere eine Zugmittelgetriebeeinheit gemäß den vorhergehenden Ausführungen zur Erfindung. Wesentlich ist nun, dass ein Aufnehmen von Spannkräften einer Zugmittelgetriebeeinheit isoliert zu einem Rahmen vorgesehen ist, gefolgt von einem Einleiten von Drehmomentkräften über eine Antriebszugmittelscheibe in die Zugmittelgetriebeeinheit. Diese eingeleiteten Drehmomentkräfte werden anschließend zu einer Abtriebszugmittelscheibe isoliert zu dem Rahmen über wenigstens zwei in Reihe zueinander angeordnete, d.h. in Kraftübertragungsrichtung aufeinander folgend angeordnete, Zugmittel übertragen. Abschließend ist ein Ausleiten der Drehmomentkräfte über die Abtriebszugmittelscheibe zum Antreiben des Vorder- oder Hinterrades vorgesehen. Dieses erfindungsgemäße Verfahren kann ergänzend eine Relativverstellung einer ersten und einer zweiten Stützeinheit umfassen, wobei zum Aufbau und zur Funktion dieser Stützeinheiten auf die vorhergehenden Ausführungen Bezug genommen wird. Insgesamt ermöglicht dieses Verfahren eine Entkoppelung der Zugmittelkräfte hin zur Hinterachse, was im Endergebnis eine Optimierung des Antisquats unabhängig vom Schnittpunkt der Zugmittellinie mit der Antisquatlinie ermöglicht. Mit anderen Worten wird eine Relativlageänderung von einer Vorder- oder Hinterachse zu einer Antriebsachse, beispielsweise einer Pedalierachse, vorliegend durch einer Relativlageänderung des ersten und des zweiten Stützelementes der Zugmittelgetriebeeinheit ausgeglichen, ohne dass sich dabei Abstandsänderungen der Zugmittelrollen der jeweiligen Stützeinheit zueinander Ändern. Zur Kompensation der Abstandänderung wird vielmehr die Relativlage der beiden Stützeinheiten zueinander angepasst. Dies erfolgt ohne Einfluss auf die Zugmittelspannung.

Die Erfindung ermöglichst schließlich auch ein Verfahren zum Eliminieren der Wechselwirkung zwischen einem Antriebsstrang mit einer Zugmittelgetriebeeinheit und einer Feder-/Dämpfungseinrichtung bei einem ein- oder mehrspurigen Fahrzeug, insbesondere Fahrrad, Pedelec, E-Bike oder Fahrrad mit Hilfsantrieb, insbesondere einem erfindungsgemäßen Fahrzeug. Vom Grundaufbau her umfasst ein für das erfindungsgemäße Verfahren geeignetes Fahrzeug ein Vorderrad und wenigstens ein Hinterrad. Diese sind beide an einem Rahmen gelagert, wobei der Rahmen für dieses erfindungsgemäße Verfahren mehrteilig ausgebildet ist und einen Hauptrahmen und eine schwenkbar an diesem gelagerte Radstrebe aufweist. Das Vorderrad ist um eine Vorderradachse und das Hinterrad ist um eine Hinterradachse rotierbar an diesem Rahmen gelagert, wobei das Vorderrad oder das Hinterrad über die Radstrebe am Hauptrahmen gelagert ist. Eines der beiden Räder ist somit gegenüber dem Hauptrahmen verschwenkbar. Dies wird in an sich bekannter Weise genutzt, um beispielsweise eine Fahrzeugdämpfung zu bewirken. Dazu ist es bekannt, zwischen Radstrebe und Hauptrahmen eine geeignete Feder-/Dämpfungseinrichtung vorzusehen. Die Feder-/Dämpfungseinrichtung bezeichnet eine, im Stand der Technik beispielsweise auch an sich bekannte, Einrichtung, deren Funktion in der Federung und Dämpfung von Verstellbewegungen zwischen dem Hauptrahmen und der schwenkbar an diesem angeordneten Radstrebe liegt. Weiter ist für das erfindungsgemäße Verfahren eine, insbesondere erfindungsgemäße, Zugmittelgetriebeeinheit mit wenigstens zwei, insbesondere in Serie zueinander angeordneten, Zugmitteln, insbesondere Riemen, vorgesehen. Bevorzugt wird hierzu auf eine erfindungsgemäße Zugmittelgetriebeeinheit zurückgegriffen. Die Zugmittelgetriebeeinheit steht in Antriebsverbindung zwischen einer Antriebsachse und einer Drehachse des Vorderrades oder des Hinterrades. Mithilfe der Zugmittelgetriebeeinheit wird somit ein Antriebsdrehmoment von der Antriebsdrehachse, beispielsweise einer Pedalier- und/oder Motorachse, an das jeweils angetriebene Rad weitergeleitet. Für das erfindungsgemäße Verfahren ist es nun vorgesehen, dass mithilfe der Feder-/Dämpfungseinrichtung ein gedämpftes/gefedertes Verschwenken der Radstrebe und des daran gelagerten Rades relativ zum Hauptrahmen erfolgt, beispielsweise beim Auf- bzw. Durchfahren eines Hindernisses. Getrennt hierzu ist beispielsweise ein unabhängiges Übertragen eines Antriebsdrehmomentes vorgesehen. Dies bedeutet, dass eine Änderung der Relativlage des angetriebenen und gegenüber dem Hauptrahmen gefedertem/gedämpften Rad/Radstrebe keinen Einfluss auf aktuell über die Zugmittelgetriebeeinheit übertragenes Antriebsdrehmoment hat. Dazu kann es insbesondere vorgesehen sein, dass ein Ausgleichen von Abstandsänderungen zwischen der Antriebsachse und der Drehachse durch eine Verdrehung einer ersten Stützeinheit eines Antriebszugmittels relativ zu einer zweiten Stützeinheit eines Abtriebszugmittels der Zugmittelgetriebeeinheit erfolgt. Über die Verdrehung bzw. die damit einhergehende Winkeländerungen der Winkellage der beiden Stützeinheiten zueinander wird somit ein Ausgleich der durch den Ein-/Ausfedervorgang auftretenden Abstandsänderungen zwischen Antriebsachse und Drehachse des angetriebenen Rades bewirkt, ohne dass dies einen Einfluss auf die Zugmittel bzw. auf die Winkelstellung bzw. Relativdrehlage zwischen Rad- und Pedalierachse selbst hat und die Drehlage der Antriebsachse und des angetriebenen Rades nicht beeinflusst. Damit kann eine Rückwirkung der Relativlageänderung zwischen Antriebsachse und Drehachse beim Ein-/Ausfedervorgang auf die Drehmoment übertragenden Zugmittel eliminiert werden. Es ist mit anderen Worten somit vorgesehen, dass ein von Zugkräften der Zugmittel unabhängiges, insbesondere rückwirkungsfreies, Übertragen der Antriebsdrehmomente auf das Verschwenken der Radstrebe und das daran gelagerten Rades relativ zum Hauptrahmen/erfolgt. Die Drehlage der angetriebene Radachse und die Antriebsdrehachse ändern ihre Relativlage zum Boden beim Ein-/Ausfedervorgang somit nicht, wohl aber relativ zum Hauptrahmen.

Die Erfindung wird nachstehend anhand der in den Figuren gezeigten Ausführungsbeispiele näher erläutert. Es zeigen schematisch:
- Figur 1:: eine Seitenansicht eines Fahrzeugs;
- Figur 2:: eine Seitenansicht eines Fahrzeugs mit eingefedertem Hinterrad;
- Figur 3:: eine Ansicht gemäß Figur 1 mit Bremseinrichtung;
- Figur 4:: eine Ansicht gemäß Figur 2 mit Bremseinrichtung;
- Figur 5:: eine Übersicht über die Anordnung einer Zugmittelgetriebeeinheit von der Kurbelwelle bis zum Hinterrad;
- Figur 6:: eine Seitenansicht der Zugmittelgetriebeeinheit;
- Figur 7:: Schnittansichten von oben auf die Zugmittelgetriebeeinheit;
- Figur 8:: eine Schnittansicht von oben auf die Übertragungszugmittelscheibeneinheit;
- Figur 9:: eine seitliche Schnittansicht der Übertragungszugmittelscheibeneinheit gemäß der Schnittebene A aus Figur 8;
- Figur 10:: eine Schnittansicht von oben auf eine erste Ausführungsform der Übertragungszugmittelscheibeneinheit;
- Figur 11:: eine Schnittansicht von oben auf eine zweite Ausführungsform der Übertragungszugmittelscheibeneinheit;
- Figur 12:: eine Schnittansicht von oben auf eine dritte Ausführungsform der Übertragungszugmittelscheibeneinheit;
- Figur 13:: eine Schnittansicht von oben auf eine vierte Ausführungsform der Übertragungszugmittelscheibeneinheit;
- Figur 14:: eine Schnittansicht von oben auf die zweite Stützeinheit und die Hinterradnabe bei montiertem Hinterrad;
- Figur 15:: eine Schnittansicht von oben auf die zweite Stützeinheit und die Hinterradnabe bei demontiertem Hinterrad;
- Figur 16:: ein Ablaufdiagramm der Verfahren;
- Figur 17:: Seitenansicht auf ein Fahrzeug aus dem Stand der Technik mit konventionellem Kettenantrieb und Antisquat-Linie; und
- Figur 18:: Seitenansicht auf das Fahrzeug aus Figur 1 mit Antisquat-Linie.

Gleiche beziehungsweise gleich wirkende Bauteile sind in den Figuren mit den gleichen Bezugszeichen beziffert. Sich wiederholende Bauteile sind nicht in jeder Figur gesondert bezeichnet.

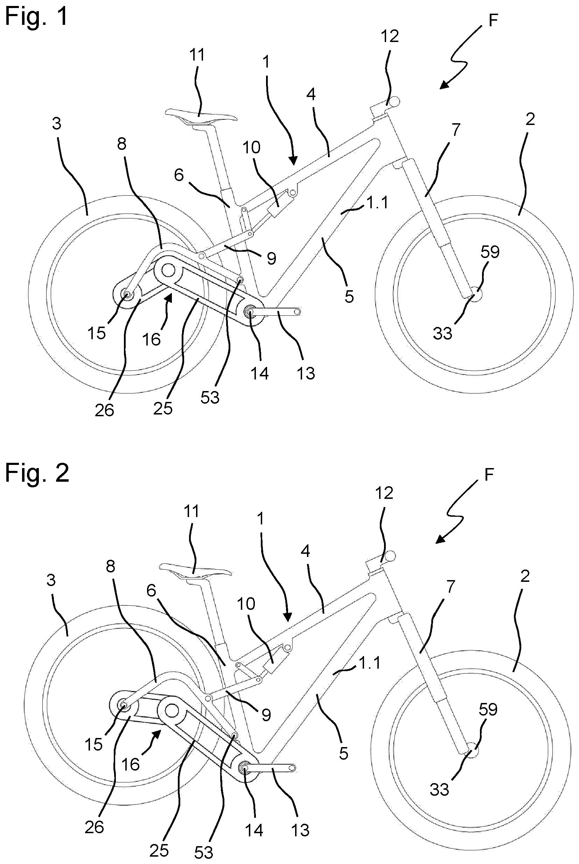

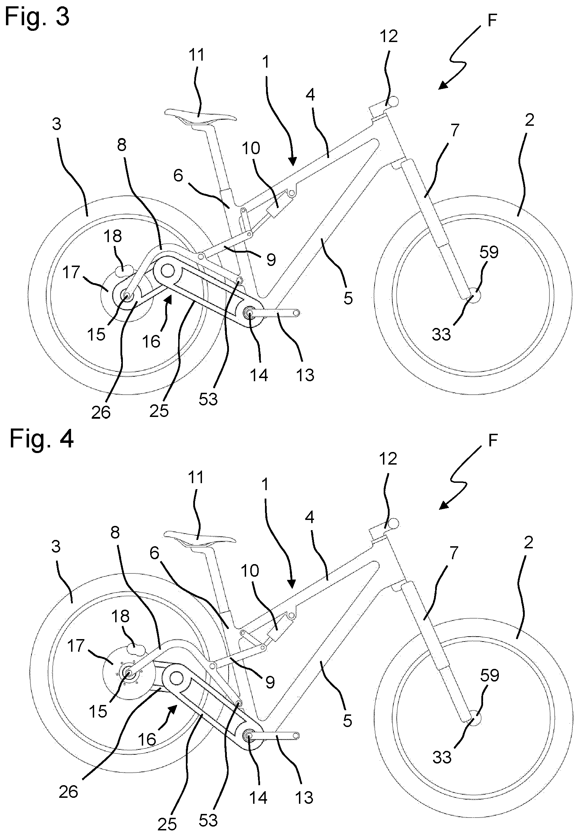

Die Figuren 1-4 zeigen jeweils ein Fahrzeug F am Beispiel eines Fahrrades, insbesondere eines E-Bikes. Das Fahrrad weist beispielsweise einen Rahmen 1 auf, der von einem Vorderrad 2 und einem Hinterrad 3 getragen werden kann. Der Rahmen 1 kann beispielsweise ein Oberrohr 4, ein Unterrohr 5, ein Sattelrohr 6, eine Vordergabel 7, eine Hinterradstrebe 8 beziehungsweise Hinterradschwinge, und eine Sitzstrebe 9 umfassen. Die Vordergabel 7 kann mit einem Vorderradnabenkörper 59 verbunden sein, über den das Vorderrad 2 am Rahmen 1 gelagert sein kann. Das Vorderrad 2 kann dabei um eine Vorderradachse 33 rotierend gelagert sein. Zur Lenkung des als Fahrrad ausgebildeten Fahrzeugs F kann die Vordergabel 7 drehfest mit einem Lenker 12 verbunden sein. Am Sattelrohr 6 wiederum kann ein Sattel 11 angeordnet sein. Die Hinterradstrebe 8 kann beispielsweise über ein Strebenlager 53 drehbar mit den restlichen Rahmenteilen, beispielsweise dem Sattelrohr 6, verbunden sein. Der Rahmen 1 insgesamt umfasst somit einen Hauptrahmen 1.1, vorliegend beispielsweise mit dem Oberrohr 4, dem Unterrohr 5, der Vordergabel 7 und dem Sattelrohr 6, und eine zu Feder-/Dämpfungszwecken relativ zum diesem Hauptrahmen 1.1 um eine horizontale Schwenkachse verschwenkbare Hinterradstrebe 8. Am Hauptrahmen 1.1 ist das Vorradrad 2 und an der Hinterradstrebe 8 das Hinterrad 3 gelagert, wobei dies auch umgekehrt erfolgen kann. Über diese Drehbarkeit bzw. Schwenkbarkeit kann das Hinterrad 3 somit gefedert am Rahmen 1 gelagert sein, beispielsweise über eine mit der Hinterradstrebe 8 verbundene Sitzstrebe 9, die wiederum über einen Dämpfer 10 beispielsweise mit dem Oberrohr 4 verbunden sein kann. Die konkrete Ausgestaltung der Feder-/Dämpfungseinrichtung kann variieren. Die Figuren 1 und 3 zeigen das Fahrrad in einer Ruheposition. Die Figuren 2 und 4 wiederum zeigen das Fahrrad mit maximal eingefedertem Hinterrad 3. Die Hinterradstrebe 8 lagert das Hinterrad 3 beispielsweise um eine Hinterradachse 15 rotierbar. Um einem Fahrer des Fahrzeuges F beziehungsweise des Fahrrades die Möglichkeit zu geben, Antriebsenergie aus menschlicher Muskelkraft in den Antriebsstrang des Fahrzeuges F einzubringen, kann dieses ein Pedal 13, insbesondere ein Pedal 13 pro Seite, aufweisen. Der beschriebene Rahmen 1 ist im Stand der Technik grundsätzlich bekannt, sodass der Aufbau und das Zusammenspiel der einzelnen Rahmenteile dem Fachmann bekannt sind.

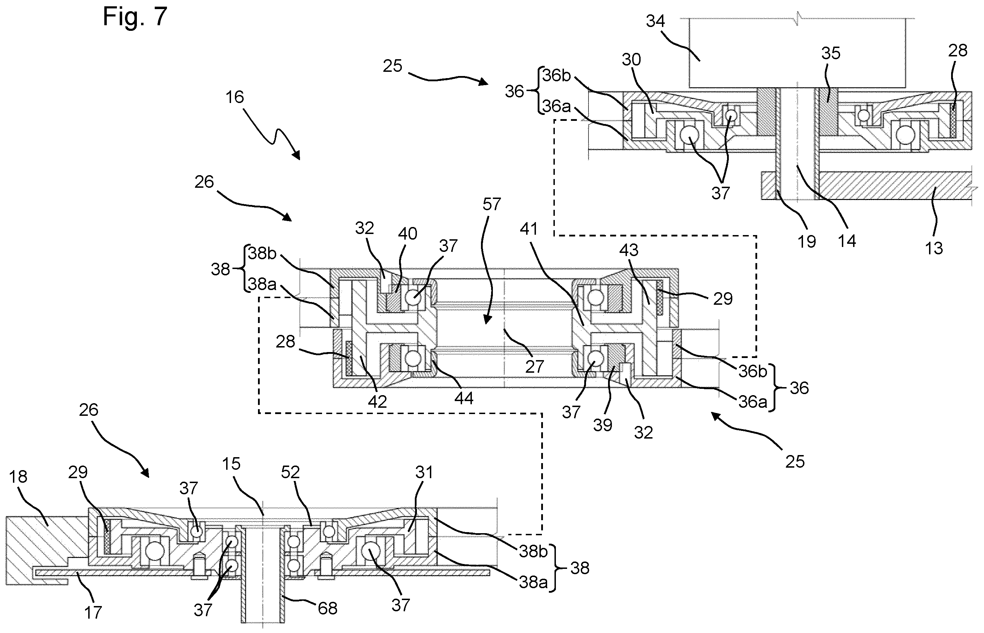

Zur Übertragung von Antriebsenergie auf das Hinterrad 3 kann das Fahrzeug F eine Zugmittelgetriebeeinheit 16 umfassen, die Antriebsenergie von einer um die Antriebsachse 14 rotierenden Antriebswelle 35 (siehe Figur 7) aufnimmt und diese auf das Hinterrad 3 überträgt. In den gezeigten Ausführungsbeispielen der Figuren 1-4 ist das Hinterrad 3 das angetriebene Rad des Fahrzeuges F. Genauso gut könnte allerdings ebenfalls das Vorderrad 2 das angetriebene Rad des Fahrzeuges F sein. In diesem Fall würde die Zugmittelgetriebeeinheit 16 die Antriebsenergie von der um die Antriebsachse 14 rotierenden Antriebswelle 35 (siehe Figur 7) auf das Vorderrad 2 übertragen. Auch wenn derartige Ausführungsformen in den Figuren nicht gezeigt sind, so sind sie von der Erfindung dennoch mit umfasst.

Die Zugmittelgetriebeeinheit 16 kann eine erste Stützeinheit 25 und eine zweite Stützeinheit 26 umfassen. Die erste Stützeinheit 25 kann beispielsweise um die Antriebsachse 14 drehbar am Rahmen 1 gelagert sein. Die zweite Stützeinheit 26 wiederum kann drehbar um die Hinterradachse 15 am Rahmen 1, beispielsweise der Hinterradstrebe 8, gelagert sein. Die Stützeinheiten 25, 26 können zwischen der Antriebsachse 14 und der Hinterradachse 15 gelenkig miteinander verbunden sein, sodass sie beispielsweise gegeneinander verschwenkbar sind. Diese Verschwenkbarkeit wird insbesondere dann genutzt, wenn sich der Abstand zwischen der Antriebsachse 14 und der Hinterradachse 15 ändert, wie dies beispielsweise bei einem Federvorgang des Hinterrades 3 der Fall ist. Wie sich aus einem Vergleich der Figuren 1 und 2 beziehungsweise 3 und 4 ergibt, kann eine entsprechende Abstandsänderung der Antriebsachse 14 zur Hinterradachse 15 durch eine Verschwenkung der ersten Stützeinheit 25 relativ zur zweiten Stützeinheit 26 der Zugmittelgetriebeeinheit 16 ausgeglichen werden. Durch den speziellen Aufbau der Zugmittelgetriebeeinheit 16, der nachstehend noch mehr erläutert wird, wird hierbei ein Pedalkickback verhindert oder sogar ein gewünschter positiver oder negativer Pedalkickback eingestellt. Dies ermöglicht eine vollständige Eliminierung von aufgrund des Ein- und Ausfedervorgangs bei konventionellen Systemen auftretenden Rückwirkungen auf die Zugmittelgetriebeeinheit.

In den Figuren 1-4 ist die Anordnung der Zugmittelgetriebeeinheit 16 derart gezeigt, dass die gelenkige Verbindung der Stützeinheiten 25, 26, sprich, die Übertragungsachse 27, vertikal über der Lagerung der ersten Stützeinheit 25 um die Antriebsachse 14 und/oder der Lagerung der zweiten Stützeinheit 26 um die Hinterradachse 15 angeordnet ist. Alternativ hierzu könnte es allerdings genauso gut sein, dass die Zugmittelgetriebeeinheit 16 derart ausgebildet und angeordnet ist, dass die gelenkige Verbindung der Stützeinheiten 25, 26 vertikal unter der Lagerung der ersten Stützeinheit 25 um die Antriebsachse 14 und/oder der Lagerung der zweiten Stützeinheit 26 um die Hinterachse 15 angeordnet ist. Wie ebenfalls in den Figuren 1-4 gezeigt, kann die Hinterradstrebe 8 gebogen ausgebildet sein, insbesondere derart gebogen, dass sie einen, insbesondere von der Hinterradachse 15 aus gesehen, nach oben ragenden Scheitelpunkt aufweist. Die Hinterradstrebe 8 kann hierdurch dazu ausgebildet sein, die Zugmittelgetriebeeinheit 16 und insbesondere die gelenkige Verbindung zwischen der ersten Stützeinheit 25 und der zweiten Stützeinheit 26 vertikal nach oben zu umlaufen beziehungsweise zu umgehen. Die Hinterradstrebe 8 kann mit anderen Worten dazu ausgebildet sein, der Zugmittelgetriebeeinheit 16 räumlich auszuweichen, um dieser den Bauraum im Bereich zwischen der Antriebsachse 14 und der Hinterradachse 15 zu überlassen.

Der Unterschied der Ausführungsformen der Figuren 1 und 2 beziehungsweise 3 und 4 liegt darin, dass die Figuren 3 und 4 ein Fahrzeug F zeigen, welches mit einer Bremseinrichtung, umfassend eine Bremsscheibe 17 und einen Bremssattel 18, ausgerüstet ist. Die Bremseinrichtung kann dabei beispielsweise an der Zugmittelgetriebeeinheit 16 angeordnet sein, beispielsweise an der zweiten Stützeinheit 26. Figur 3 zeigt ein Beispiel, bei dem die Bremseinrichtung an der Zugmittelgetriebeeinheit 16 zwischen der Zugmittelgetriebeeinheit 16 und dem Hinterrad 3 angeordnet sein kann. Mit anderen Worten ist in diesem Beispiel die Bremseinrichtung an der Zugmittelgetriebeeinheit 16 auf der dem Hinterrad 3 zugewandten Seite der Zugmittelgetriebeeinheit 16 angeordnet. Figur 4 dagegen zeigt eine alternative Ausführungsform, bei der die Bremseinrichtung an der Zugmittelgetriebeeinheit 16 auf der dem Hinterrad 3 abgewandten Seite der Zugmittelgetriebeeinheit 16 angeordnet ist. Mit anderen Worten ist bei dieser Ausführungsform die Zugmittelgetriebeeinheit 16 zwischen der Bremseinrichtung und dem Hinterrad 3 angeordnet.

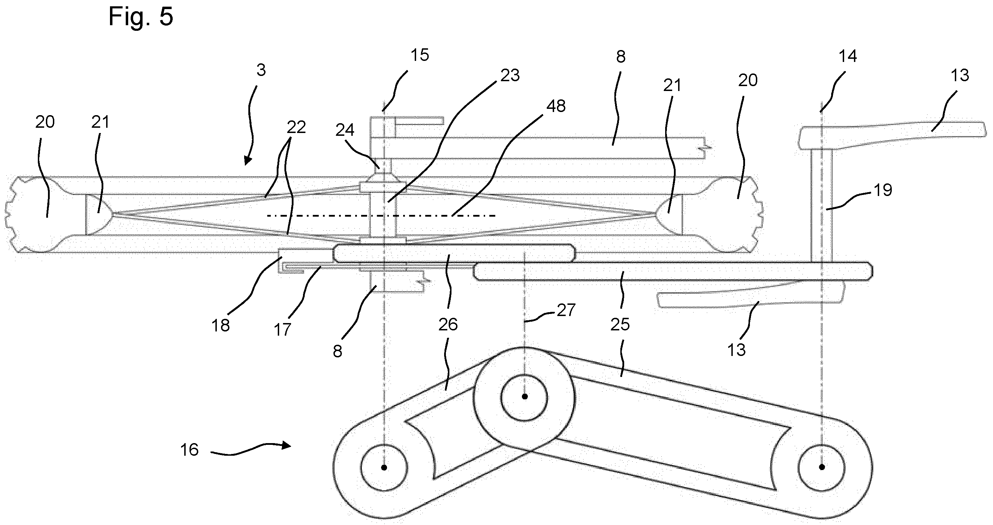

Die Anordnung gemäß der Ausführungsform nach Figur 4 ist in Figur 5 detaillierter dargestellt. Insbesondere zeigt der obere Teil der Figur 5 einen Horizontalschnitt durch das um die Hinterradachse 15 rotierende Hinterrad 3, Teile des Rahmens 1 und der von den Pedalen 13 angetriebenen Kurbelwelle 19, die um die Antriebsachse 14 rotiert. Zum besseren Verständnis und zur Orientierung ist darunter nochmals eine Seitenansicht der Zugmittelgetriebeeinheit 16 dargestellt, und zwar derart, dass die Anordnung der Hinterradachse 15, der Antriebsachse 14 und der Übertragungsachse 27, um die die erste Stützeinheit 25 und die zweite Stützeinheit 26 gegeneinander drehbar sein können, zwischen dem oberen und dem unteren Teil der Figur 5 übereinstimmt. Aus Figur 5 geht auch der Aufbau des Hinterrades 3 hervor. Dieses kann einen Reifen 20 und eine Felge 21 umfassen. Die Felge 21 kann über Speichen 22 mit einem Hinterradnabenkörper 23 verbunden sein. Der Hinterradnabenkörper 23 wiederum kann auf einem von beispielsweise zwei Hinterradstreben 8 getragenen Hinterradachskörper 24 um die Hinterradachse 15 rotierbar gelagert sein. Der Hinterradnabenkörper 23 wird, wie nachstehend noch näher erläutert wird, über die Zugmittelgetriebeeinheit 16 angetrieben. Um insbesondere am Hinterrad 3 einen möglichst schmalen Aufbau zu erreichen, kann die zweite Stützeinheit 26 gegenüber der ersten Stützeinheit 25 entlang der Hinterradachse 15 zur Fahrzeugmitte hin versetzt angeordnet sein. Zur Fahrzeugmitte hin kann beispielsweise in Richtung des Hinterrades 3 oder in Richtung der nachstehend noch näher erläuterten Symmetrieachse 48 bedeuten. Dadurch, dass die zweite Stützeinheit 26 und damit auch die Kraftübertragung auf den Hinterradnabenkörper 23 besonders nah am Hinterrad 3 liegt, kann das Hinterrad 3 einen symmetrischen Satz Speichen 22 aufweisen. Insbesondere können die Speichen 22, die Felge 21 und der Reifen 20 eine gemeinsame Symmetrieachse 48 aufweisen. Durch die symmetrische Anordnung der Speichen 22 werden diese gleichmäßig belastet und weisen dadurch eine erhöhte Lebensdauer auf.

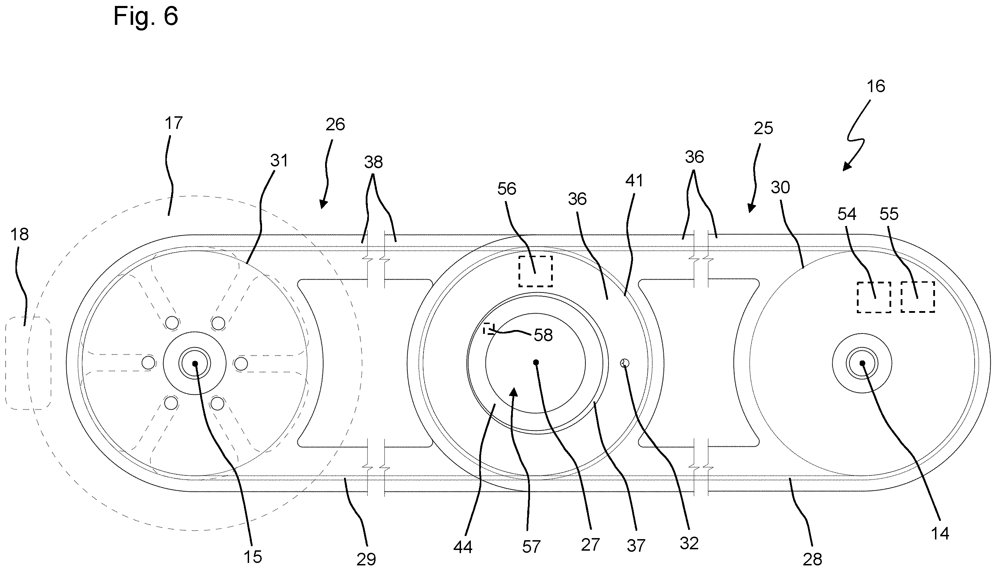

Der allgemeine Aufbau der Zugmittelgetriebeeinheit 16 ist in Figur 6 dargestellt. Die Zugmittelgetriebeeinheit 16 kann eine erste Stützeinheit 25 und eine zweite Stützeinheit 26 umfassen. Die erste Stützeinheit 25 kann dabei beispielsweise von einem ersten Gehäuse 36 gebildet sein. Die zweite Stützeinheit 26 kann beispielsweise von einem zweiten Gehäuse 38 gebildet sein. Die beiden Stützeinheiten 25, 26 beziehungsweise Gehäuse 36, 38 können gelenkig miteinander verbunden sein, sodass sie um eine gemeinsame Übertragungsachse 27 gegeneinander verschwenkbar ausgebildet sein können. Das erste Gehäuse 36 kann eine um die Antriebsachse 14 rotierbare Antriebszugmittelscheibe 30 und zumindest teilweise eine Übertragungszugmittelscheibeneinheit 41 umgeben beziehungsweise einhausen. Ein Antriebszugmittel 28, beispielsweise ein Zahnriemen, kann in Wirkverbindung mit der Antriebszugmittelscheibe 30 und der Übertragungszugmittelscheibeneinheit 41 angeordnet sein, so dass die Rotation der Antriebszugmittelscheibe 30 auf die Übertragungszugmittelscheibeneinheit 41 übertragen wird. Das zweite Gehäuse 38 kann eine um die Hinterradachse 15 rotierbare Abtriebszugmittelscheibe 31 und zumindest teilweise ebenfalls die Übertragungszugmittelscheibeneinheit 41 umgeben beziehungsweise einhausen. Ein Abtriebszugmittel 29, beispielsweise ebenfalls ein Zahnriemen, kann in Wirkverbindung mit der Abtriebszugmittelscheibe 31 und der Übertragungszugmittelscheibeneinheit 41 angeordnet sein, sodass die Rotation der Übertragungszugmittelscheibeneinheit 41 auf die Abtriebszugmittelscheibe 31 übertragen wird. Wie nachstehend noch näher erläutert werden wird, kann die Antriebszugmittelscheibe 30 von einer Antriebswelle 35 (siehe Figur 7) des Fahrzeugs F angetrieben werden, während die Abtriebszugmittelscheibe 31 den Hinterradnabenkörper 23 und damit das Hinterrad 3 antreiben kann. Insgesamt kann die Zugmittelgetriebeeinheit 16 daher derart ausgebildet sein, dass sie die Antriebsenergie von der Antriebswelle 35 (siehe Figur 7) auf das Hinterrad 3 überträgt.

Wichtig ist, dass die Gehäuse 36, 38 dazu ausgebildet sein können, die Spannkräfte des Antriebszugmittels 28 und des Abtriebszugmittels 29 aufzunehmen. Die Spannkräfte der Zugmittel 28, 29 werden also direkt in die Gehäuse 36, 38 eingeleitet, weshalb die Zugmittel 28, 29 auch bereits vorgespannt werden können, bevor die Zugmittelgetriebeeinheit 16 am Rahmen 1 des Fahrzeuges F montiert wird. Die Zugmittelgetriebeeinheit 16 und insbesondere die erste Stützeinheit 25 und die zweite Stützeinheit 26 beziehungsweise das erste Gehäuse 36 und das zweite Gehäuse 38 können derart ausgebildet sein, dass keine Spannkräfte der Zugmittel 28, 29 in den Rahmen 1 eingeleitet beziehungsweise auf diesen übertragen werden. Um die Zugmittel 28, 29 vorzuspannen, kann die Zugmittelgetriebeeinheit 16 Zugmittelspanner 39, 40 (siehe Figur 7) aufweisen, die zur Einführung eines entsprechenden Werkzeuges zur Einstellung der Vorspannung über das jeweilige Gehäuse 36, 38 durchdringende Vorspannzugänge 32 von außen zugänglich sind. Bei den Zugmittelspannern 39, 40 kann es sich beispielsweise um die nachstehend noch näher erläuterten Exzenterzugmittelspanner handeln.

In Figur 6 sind noch weitere Elemente gezeigt, die verschiedene Funktionalitäten der Zugmittelgetriebeeinheit 16 ermöglichen. So kann beispielsweise ein Geschwindigkeitssensor 54 vorgesehen sein, der die Fahrgeschwindigkeit des Fahrzeuges F ermittelt. Dieser kann, wie im gezeigten Ausführungsbeispiel, beispielsweise an der Antriebszugmittelscheibe 30 angeordnet sein. Genauso gut könnte der Geschwindigkeitssensor 54 allerdings an der Übertragungszugmittelscheibeneinheit 41 oder der Abtriebszugmittelscheibe 31 angeordnet sein. Darüber hinaus kann die Zugmittelgetriebeeinheit 16 einen elektrischen Generator 55, beispielsweise in der Art eines Dynamos, aufweisen. Auch dieser ist im gezeigten Ausführungsbeispiel an der Antriebszugmittelscheibe 30 angeordnet, könnte allerdings genauso gut an der Übertragungszugmittelscheibeneinheit 41 oder der Abtriebszugmittelscheibe 31 angeordnet sein. Schließlich kann ein Federwegsensor 56 vorgesehen sein, der beispielsweise anhand der Verschwenkung der Stützeinheiten 25, 26 beziehungsweise der Gehäuse 36, 38 zueinander um die Übertragungsachse 27 auf einen Federweg der Federung des Hinterrades 3 schließt. Der Geschwindigkeitssensor 54 und/oder der Federwegsensor 56 können mit einer nicht dargestellten Steuereinrichtung des Fahrzeuges F verbunden sein, um diese mit den Messdaten zu versorgen. Die Zugmittelgetriebeeinheit 16 kann, insbesondere um die Übertragungsachse 27 herum, eine Durchgangsöffnung 57 aufweisen, die die Zugmittelgetriebeeinheit 16 und insbesondere die Übertragungszugmittelscheibeneinheit 41 vollständig durchdringen kann und insbesondere auch nach außen offen sein kann. Im Bereich dieser Durchgangsöffnung 57 kann ferner eine Beleuchtungseinrichtung 58, beispielsweise umfassend eine oder mehrere LEDs, angeordnet sein. Die Beleuchtungseinrichtung 58 ist insbesondere dazu ausgebildet, die Durchgangsöffnungen 57 und/oder ein zumindest teilweise in der Durchgangsöffnung 57 angeordnetes Innengehäuse 44 zu beleuchten.

In Figur 7 ist der Aufbau der Zugmittelgetriebeeinheit 16 detailliert dargestellt. Insbesondere zeigt Figur 7 einen Horizontalschnitt durch die Zugmittelgetriebeeinheit 16. Wie bereits in Figur 6 gezeigt, sind die erste Stützeinheit 25 und die zweite Stützeinheit 26 in der Darstellung gemäß Figur 7 in einem Winkel von 180° um die Übertragungsachse 27 zueinander angeordnet. Mit anderen Worten ist das durch die Drehbarkeit um die Übertragungsachse 27 gebildete Knie zwischen den Stützeinheiten 25, 26 vollständig gestreckt. Um die Darstellung nicht zu klein werden zu lassen, sind die einzelnen Anteile der Zugmittelgetriebeeinheit 16 zueinander seitlich versetzt dargestellt. Tatsächlich sind die dargestellten Bereiche der Zugmittelgetriebeeinheit 16 wie durch die gestrichelten Linien angedeutet hintereinander beziehungsweise nebeneinander angeordnet.

Der in Figur 7 rechts oben dargestellte Teil der Zugmittelgetriebeeinheit 16 zeigt den drehbar um die Antriebsachse 14 gelagerten Teil der ersten Stützeinheit 25. Dieser kann die Antriebszugmittelscheibe 30, die von der Antriebswelle 35 angetrieben wird, umfassen. Die Antriebswelle 35 wiederum kann der Ausgang einer Antriebseinheit 34 sein, die beispielsweise wenigstens einen nicht dargestellten Antriebsmotor, beispielsweise einen Elektromotor, umfassen kann. Insbesondere kann die Antriebseinheit 34 derart ausgebildet sein, dass sie über die Rotation der Antriebswelle 35 eine Kombination der vom Fahrer des Fahrzeuges F durch menschliche Muskelkraft über die Pedale 13 und die Kurbelwelle 19 aufgebrachten Antriebsleistung und der Antriebsleistung des oder der Antriebsmotoren ausgibt. Darüber hinaus umfasst die Antriebseinheit 34 bevorzugt bereits eine die Funktion einer Gangschaltung übernehmende Getriebeübersetzung, sodass außerhalb der Antriebseinheit 34 keine Gangschaltung mehr am Fahrzeug F notwendig ist. Die Antriebswelle 35 kann drehfest mit der Antriebszugmittelscheibe 30 verbunden sein, sodass diese von der Antriebswelle 35 angetrieben wird. Die Antriebszugmittelscheibe 30 wird von einem nicht mitrotierenden ersten Gehäuse 36 umgeben, an dem die Antriebszugmittelscheibe 30 über Drehlager 37, beispielsweise Wälzlager beziehungsweise Kugellager, insbesondere Rillenkugellager, gelagert sein kann. Das Gehäuse 36 kann beispielsweise aus zwei beispielsweise aus Kunststoff gefertigten Gehäusehälften 36a, 36b bestehen. Die Antriebszugmittelscheibe 30 kann mit einem Antriebszugmittel 28 versehen sein, welches die Rotationsbewegung der Antriebszugmittelscheibe 30 auf die in der Mitte der Figur 7 dargestellte Übertragungszugmittelscheibeneinheit 41 überträgt.

Die Übertragungszugmittelscheibeneinheit 41 ist in der mittleren Darstellung gemäß Figur 7 gezeigt. Sie kann zum Teil vom ersten Gehäuse 36, welches die erste Stützeinheit 25 bildet, und zum Teil vom zweiten Gehäuse 38, welches die zweite Stützeinheit 26 bildet, umgeben beziehungsweise eingehaust sein. Die Übertragungszugmittelscheibeneinheit 41 kann eine Eingangszugmittelscheibe 42, die mit dem von der Antriebszugmittelscheibe 30 kommenden Antriebszugmittel 28 in Wirkverbindung steht, umfassen. Darüber hinaus kann die Übertragungszugmittelscheibeneinheit 41 eine Ausgangszugmittelscheibe 43 umfassen, die mit dem Abtriebszugmittel 29 in Wirkverbindung steht. Im gezeigten Ausführungsbeispiel ist die Übertragungszugmittelscheibeneinheit 41 als einstückiges Bauteil ausgebildet. Mit anderen Worten können die Eingangszugmittelscheibe 42 und die Ausgangszugmittelscheibe 43 zusammen einstückig ausgebildet sein. Gegenüber den nicht mitrotierenden beziehungsweise feststehenden Gehäusen 36, 38 kann die Übertragungszugmittelscheibeneinheit 41 über Drehlager 37 abgestützt sein. In der Mitte der Übertragungszugmittelscheibeneinheit 41, insbesondere um die Übertragungsachse 27 herum, kann eine Durchgangsöffnungen 57 angeordnet sein, die die Zugmittelgetriebeeinheit 16 vollständig durchdringt. In Radialrichtung von der Übertragungsachse 27 aus gesehen kann die Durchgangsöffnung 57 nach außen hin teilweise von der Übertragungszugmittelscheibeneinheit 41 und teilweise durch ein zusätzliches Innengehäuse 44 begrenzt sein, welches mit der Übertragungszugmittelscheibeneinheit 41 rotierbar ausgebildet sein kann. Insgesamt kann also von der Übertragungszugmittelscheibeneinheit 41 die von der Antriebszugmittelscheibe 30 kommende Antriebsleistung auf das Abtriebszugmittel 29 übertragen.

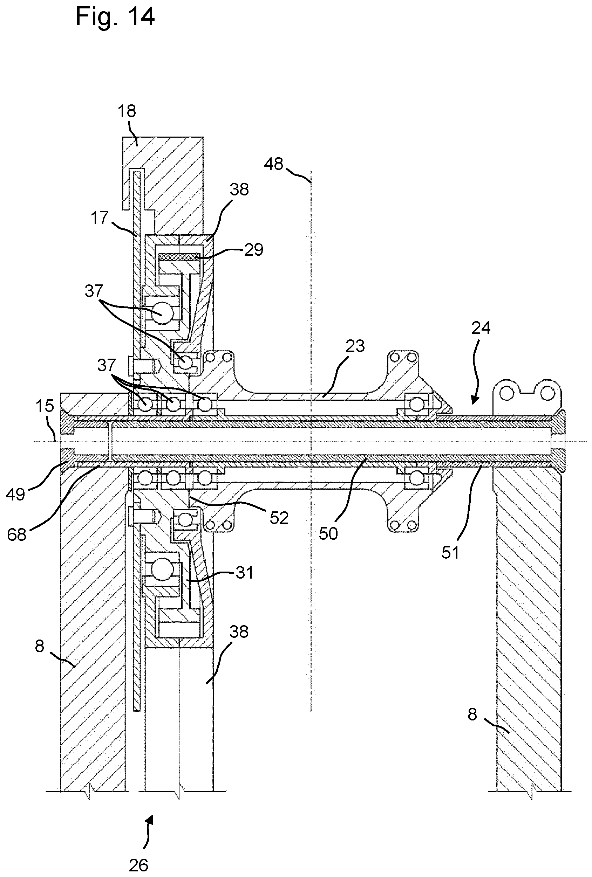

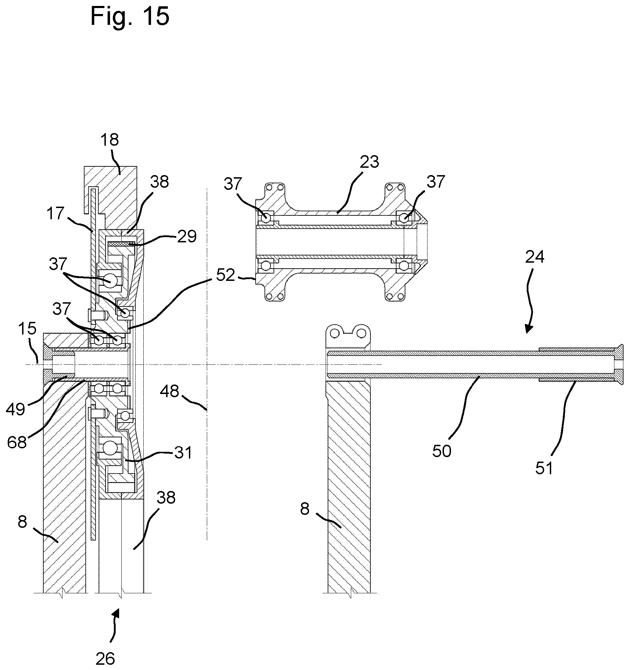

Das Abtriebszugmittel 29 wiederum kann die Rotationsbewegung der Übertragungszugmittelscheibeneinheit 41 auf die links unten in der Figur 7 dargestellte Abtriebszugmittelscheibe 31 übertragen. Die Darstellung links unten gemäß Figur 7 zeigt also denjenigen Teil der zweiten Stützeinheit 26, der um die Hinterradachse 15 drehbar an einer Lagerhülse 68 angeordnet sein kann. Insbesondere kann die Zugmittelgetriebeeinheit 16 hier die Abtriebszugmittelscheibe 31 umfassen, die um die Hinterradachse 15 rotierbar gelagert sein kann. Hierfür kann die Abtriebszugmittelscheibe 31 über Drehlager 37 gegenüber der Lagerhülse 68 abgestützt sein. Auch gegenüber dem rahmenfesten und nicht mitrotierenden zweiten Gehäuse 38 kann die Abtriebszugmittelscheibe 31 über Drehlager 37 abgestützt sein. Das zweite Gehäuse 38 kann ebenfalls aus zwei Gehäusehälften 38a, 38b bestehen. Darüber hinaus kann an der Abtriebszugmittelscheibe 31 die Bremsscheibe 17 drehfest befestigt sein, beispielsweise über eine Schraubenverbindung. Der Bremssattel 18 wiederum kann am zweiten Gehäuse 38 und mit diesem verbunden sein. Über das Abtriebszugmittel 29 kann die Abtriebszugmittelscheibe 31 mit der aus der Antriebseinheit 34 stammenden Antriebsleistung beaufschlagt werden. Diese kann die Abtriebszugmittelscheibe 31 beispielsweise über einen Formschluss 52, beispielsweise eine Stirnverzahnung, an den Hinterradnabenkörper 23 weitergeben (siehe beispielsweise Figuren 14 und 15).

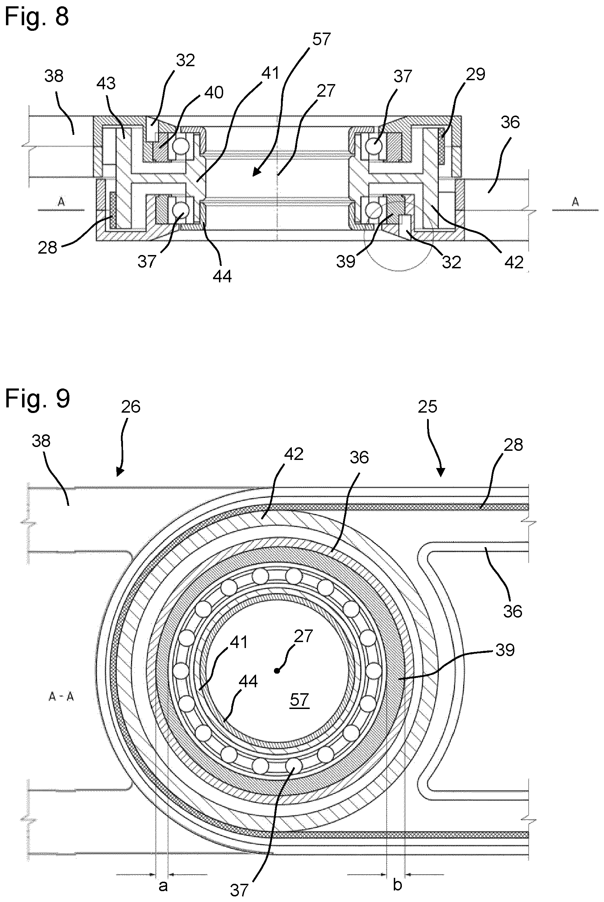

Figur 8 zeigt den Schnitt gemäß der mittleren Darstellung in Figur 7 nochmals leicht vergrößert. Neben den bereits beschriebenen Elementen ist in dieser Ansicht gemäß Figur 8 ein erster Zugmittelspanner 39 zu sehen, der zum Vorspannen des Antriebszugmittels 28 vorgesehen sein kann. Darüber hinaus kann ein zweiter Zugmittelspanner 40 vorgesehen sein, der zum Vorspannen des Abtriebszugmittels 29 vorgesehen sein kann. Bei den Zugmittelspannern 39, 40 handelt es sich beispielsweise um Exzenterzugmittelspanner. Beide Zugmittelspanner 39, 40 sind bevorzugt von außen für ein Spannwerkzeug durch einen Vorspannzugang 32 zugänglich (siehe den umkreisten Bereich in Figur 8).

Figur 9 zeigt einen Vertikalschnitt durch die Zugmittelgetriebeeinheit 16 im Bereich der Übertragungszugmittelscheibeneinheit 41. Die Schnittebene verläuft dabei durch die Eingangszugmittelscheibe 42 gemäß der in Figur 8 angedeuteten Schnittebene A. Insbesondere verdeutlicht Figur 9 den Wirkmechanismus des ersten Zugmittelspanners 39. Der zweite Zugmittelspanner 40 kann allerdings identisch ausgebildet sein, sodass die entsprechenden Erläuterungen in übertragener Weise auch für diesen gelten. Insbesondere kann der erste Zugmittelspanner 39 als um die Übertragungsachse 27 rotierbarer Ring mit bezüglich der Übertragungsachse 27 unterschiedlicher radialer Dicke ausgebildet sein. Beispielsweise weist er eine minimale radiale Dicke a und eine maximale radiale Dicke b auf. Über den Vorspannzugang 32 kann der Zugmittelspanner 39 drehbar ausgebildet sein, beispielsweise mittels eines durch den Vorspannzugang 32 eingeführten Werkzeuges. Der erste Zugmittelspanner 39 kann zwischen dem Drehlager 37 und dem ersten Gehäuse 38 angeordnet sein. Wird der Bereich des ersten Zugmittelspanners 39 mit der maximalen radialen Dicke b durch eine Drehung des Zugmittelspanner 39 in Richtung der Antriebszugmittelscheibe 30 ausgerichtet, so verdrängt der Zugmittelspanner 39 mit dem dicken Bereich das Drehlager 37 sowie die Übertragungszugmittelscheibeneinheit 41 in Richtung von der Antriebszugmittelscheibe 30 weg, wodurch das Antriebszugmittel 28 gespannt wird. Auf diese Weise kann eine gewünschte Vorspannung im Antriebszugmittel 28 eingestellt werden. In den Figuren 8 und 9 ist die Zugmittelgetriebeeinheit 16 mit vollständig gespannten Zugmitteln dargestellt. Wie bereits erläutert, funktioniert der zweite Zugmittelspanner 40 genauso, sodass die vorstehenden Erläuterungen mit den dem zweiten Zugmittelspanner 40 zugeordneten Elementen in übertragener Weise gelten.

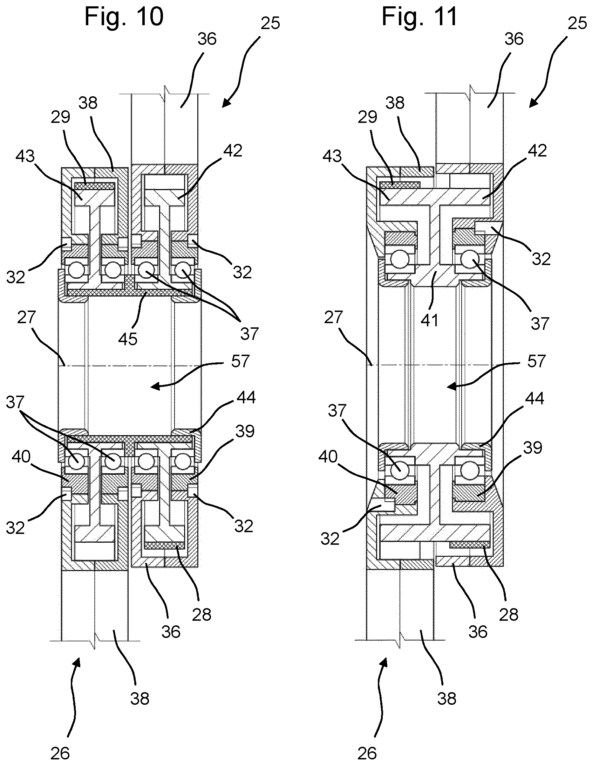

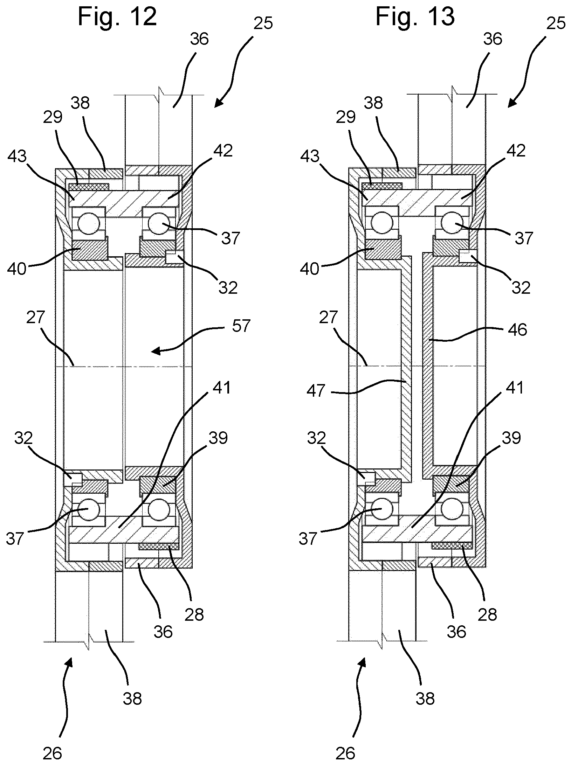

Die Figuren 10-13 zeigen verschiedene Ausgestaltungsmöglichkeiten der Zugmittelgetriebeeinheit 16 im Bereich der Übertragungszugmittelscheibeneinheit 41. Insbesondere handelt es sich jeweils um eine Draufsicht auf einen Horizontalschnitt durch die Übertragungszugmittelscheibeneinheit 41. Auf der rechten Seite der Darstellungen ist jeweils die erste Stützeinheit 25 als erstes Gehäuse 36 und auf der linken Seite jeweils die zweite Stützeinheit 26 als zweites Gehäuse 38 dargestellt. In der Ausführungsform gemäß Figur 10 ist eine Übertragungszugmittelscheibeneinheit 41 gezeigt, deren Eingangszugmittelscheibe 42 und Ausgangszugmittelscheibe 43 jeweils als separate Bauteile, getrennt voneinander ausgebildet sein können. Die Außenumfangsflächen der Eingangszugmittelscheibe 42 und der Ausgangszugmittelscheibe 43 können jeweils vollständig vom ersten Gehäuse 36 beziehungsweise vom zweiten Gehäuse 38 umhüllt beziehungsweise eingekapselt oder eingehaust sein. Um die Übertragung der Antriebsleistung von der Eingangszugmittelscheibe 42 auf die Ausgangszugmittelscheibe 43 zu realisieren, kann die Übertragungszugmittelscheibeneinheit 41 zusätzlich eine Verbindungseinheit 45 umfassen, die jeweils drehfest mit der Eingangszugmittelscheibe 42 und der Ausgangszugmittelscheibe 43 verbunden sein kann. Die vom Antriebszugmittel 28 angetriebene Eingangszugmittelscheibe 42 kann also die Rotationsbewegung auf die Verbindungseinheit 45 übertragen, welche die Rotationsbewegung wiederum auf die Ausgangszugmittelscheibe 43 und damit auf das Abtriebszugmittel 29 übertragen kann. In Figur 11 ist die bereits in den bisherigen Ausführungsbeispielen gezeigte einstückige Ausbildung der Übertragungszugmittelscheibeneinheit 41 gezeigt, bei der die Eingangszugmittelscheibe 42 und die Ausgangszugmittelscheibe 43 einstückig miteinander ausgebildet sein können. Sowohl die Ausführungsform gemäß Figur 10 als auch die Ausführungsform gemäß Figur 11 können ein mit der Übertragungszugmittelscheibeneinheit 41 rotierendes Innengehäuse 44 aufweisen, welches die Durchgangsöffnung 57 zumindest teilweise auskleiden kann. Auf dieses Innengehäuse 44 wird in den Ausführungsformen gemäß Figuren 12 und 13 verzichtet. Beide Ausführungsformen umfassen einstückig miteinander ausgebildete Eingangszugmittelscheiben 42 und Ausgangszugmittelscheiben 43. Die Durchgangsöffnung 57 kann in diesen Ausführungsformen allerdings vom nicht rotierenden beziehungsweise rahmenfesten ersten Gehäuse 36 und zweiten Gehäuse 38 begrenzt beziehungsweise ausgekleidet werden. In der Ausführungsform gemäß Figur 13 kann das erste Gehäuse 36 darüber hinaus eine erste Abdeckung 46 aufweisen, die die Durchgangsöffnung 57 auf einer Seite verschließen kann. Genauso kann das zweite Gehäuse 38 eine zweite Abdeckung 47 aufweisen, die die Durchgangsöffnung 57 auf der anderen Seite verschließen kann. Die Durchgangsöffnung 57 kann also in der Ausführungsform gemäß Figur 13 verschlossen beziehungsweise nicht durchgängig sein. Ein weiterer Unterschied zwischen den Ausführungsformen gemäß Figuren 10, 11 und Figuren 12, 13 kann darin liegen, dass die Zugmittelspanner 39, 40 in den Ausführungsformen gemäß Figuren 10 und 11 außerhalb und in den Ausführungsformen gemäß Figuren 12 und 13 innerhalb der Drehlager 37 der Übertragungszugmittelscheibeneinheit 41 angeordnet sind. Außerhalb und innerhalb bezieht sich hier auf eine Radialrichtung von der Übertragungsachse 27 aus gesehen. Von der Übertragungsachse 27 aus gesehen radial nach außen folgt also bei den Ausführungsformen gemäß Figuren 10 und 11 das Drehlager 37, der Zugmittelspanner 39, 40 und das Gehäuse 36, 38 aufeinander. Bei den Ausführungsformen gemäß Figuren 12 und 13 folgen in derselben Richtung dagegen das Gehäuse 36, 38, der Zugmittelspanner 39, 40 und dann das Drehlager 37 aufeinander. Welche der beschriebenen Ausführungsformen eingesetzt wird, hängt von den jeweiligen Anforderungen ab.

In Figur 14 ist die Anbindung der Zugmittelgetriebeeinheit 16 an das angetriebene Rad, in diesem Fall das Hinterrad 3, dargestellt. Das angetriebene Rad könnte allerdings ebenso das Vorderrad 2 sein. Konkret ist in Figur 14 eine Draufsicht auf einen Horizontalschnitt durch die Hinterradstreben 8, die Zugmittelgetriebeeinheit 16 und den Hinterradnabenkörper 23 gezeigt. Die Abtriebszugmittelscheibe 31 rotiert beispielsweise um den von einem Achsstummel 49 und einer Steckachse 50 gebildeten Hinterradachskörper 24 und insbesondere um die Hinterradachse 15. Die Abtriebszugmittelscheibe 31 kann über eine Lagerhülse 68 am Rahmen 1, insbesondere an einer Hinterradstrebe 8, gelagert sein. Der Achsstummel 49 und die Steckachse 50 können zusammen einen Hinterradachskörper 24 bilden, der ebenfalls durch die Lagerhülse 68 geführt sein kann. Die Kraftübertragung zwischen der Abtriebszugmittelscheibe 31 und dem Hinterradnabenkörper 23 erfolgt über einen Formschluss 52, beispielsweise eine Stirnverzahnung. Insbesondere handelt es sich um einen axial bezogen auf die Hinterradachse 15 lösbaren Formschluss 52. Mit anderen Worten kann der Hinterradnabenkörper 23 in Axialrichtung der Hinterradachse 15 von der Abtriebszugmittelscheibe 31 entfernt beziehungsweise gelöst werden. Damit der Hinterradnabenkörper 23 im montierten Zustand in Wirkverbindung mit der Abtriebszugmittelscheibe 31 verbleibt, wird der Hinterradnabenkörper 23 beispielsweise von einem radial verdickten Klemmabschnitt 51 der Steckachse 50 gegen die Abtriebszugmittelscheibe 31 gedrückt. In diesem Zustand kann die Steckachse 50 mit dem Klemmabschnitt 51 an der Hinterradstrebe 8 fixiert werden, so dass der Wirkeingriff des Formschlusses 52 zwischen dem Hinterradnabenkörper 23 und der Abtriebszugmittelscheibe 31 im Betrieb des Fahrzeugs F erhalten bleibt.

Figur 15 zeigt die Situation, in der der Hinterradnabenkörper 23 von der Abtriebszugmittelscheibe 31 gelöst ist, beispielsweise um das Hinterrad 3 zu wechseln. Hierzu muss lediglich die Fixierung der Steckachse 50 an der Hinterradstrebe 8 gelöst werden. Hierdurch kann die Steckachse 50 mitsamt dem Klemmabschnitt 51 aus der Zugmittelgetriebeeinheit 16 und dem Hinterradnabenkörper 23 herausgezogen werden. Der Hinterradnabenkörper 23 wird daher nicht mehr von dem Klemmabschnitt 51 der Steckachse 50 gegen die Abtriebszugmittelscheibe 31 gepresst. Der Formschluss 52 kann daher in Axialrichtung der Hinterradachse 15 gelöst werden, wodurch der Hinterradnabenkörper 23 und das mit diesem in Verbindung stehende, allerdings aus Übersichtlichkeitsgründen nicht gezeigte, Hinterrad 3 vom Rahmen 1 des Fahrzeugs F entfernt werden kann. Die Zugmittelgetriebeeinheit 16 kann dagegen zusammen mit der Lagerhülse 68 am Rahmen 1 beziehungsweise an der Hinterradstrebe 8 verbleiben. Es ist daher für einen Endverbraucher nicht notwendig, beim Wechsel eines angetriebenen Rades, beispielsweise des Hinterrades 3, Arbeiten an der Zugmittelgetriebeeinheit 16 zu verrichten. Insbesondere das Antriebszugmittel 28 und das Abtriebszugmittel 29 verbleiben in ihrer vorgespannten Anordnung in der Zugmittelgetriebeeinheit 16, was den Aus- und Einbau des angetriebenen Rades deutlich vereinfacht.

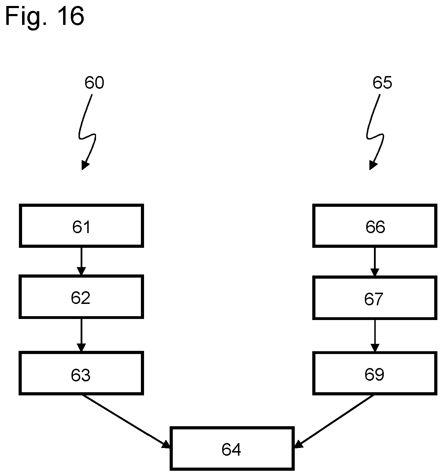

In Figur 16 ist ein Ablaufdiagramm des Verfahrens 60 zum Montieren eines Fahrzeugs F und des Verfahrens 65 zum Ausgleichen von Federbewegungen eines Fahrzeugs F dargestellt. Die Verfahren 60, 65 können sich dabei jeweils auf ein Fahrzeug F gemäß den vorstehenden Ausführungen beziehen. Darüber hinaus bezieht sich das Verfahren 65 ebenfalls auf ein gemäß dem Verfahren 60 montiertes Fahrzeug F. Obwohl einzelne Schritte in Figur 16 nacheinander dargestellt sind, können sie innerhalb der Verfahren 60, 65 gleichzeitig erfolgen. Das Verfahren 60 zum Montieren eines Fahrzeugs F beginnt mit einem Vorspannen 61 des Antriebszugmittels 28 und das Abtriebszugmittels 29 in der Zugmittelgetriebeeinheit 16, wobei die Vorspannkräfte des Antriebszugmittels 28 und das Abtriebszugmittels 29 ausschließlich von den Stützeinheiten 25, 26 aufgenommen werden. Dieser Schritt des Vorspannens 61 kann an der modularen Zugmittelgetriebeeinheit 16 durchgeführt werden, bevor diese am Fahrzeug F montiert wird. Insbesondere ist der Rahmen 1 des Fahrzeugs F nicht notwendig, um die Zugmittel 28, 29 vorzuspannen. Sämtliche hierdurch entstehenden Spannungen werden von den Stützeinheiten 25, 26 aufgenommen. Als nächstes erfolgt daher ein Einsetzen 62 der modularen Zugmittelgetriebeeinheit 16 am Fahrzeug F. Erst in diesem Schritt wird also eine Verbindung zwischen der Zugmittelgetriebeeinheit 16 und dem Fahrzeug F beziehungsweise dem Rahmen 1 des Fahrzeugs F hergestellt. Während des Einsetzens 62 kann ein Ausgleichen 63 von Toleranzen durch ein Verschwenken 64 der Stützeinheiten 25, 26 um die Übertragungsachse 27 durchgeführt werden. Mit anderen Worten kann ein und dieselbe Zugmittelgetriebeeinheit 16 bei Fahrzeugen F mit unterschiedlichen Abständen zwischen der Antriebsachse 14 und der Achse des angetriebenen Rades, beispielsweise der Hinterradachse 15 oder der Vorderradachse 33, eingesetzt werden. Die unterschiedlichen Abstände werden durch ein Verschwenken 64 der Stützeinheiten 25, 26 zueinander ausgeglichen. Dies macht den Einsatz der Zugmittelgetriebeeinheit 16 besonders variabel. Ein wesentlicher Punkt des erfindungsgemäßen Verfahrens 60 ist, dass die Zugmittelgetriebeeinheit 16 mit vollständig vorgespannten Zugmitteln 28, 29 als eigenständige Moduleinheit eingesetzt werden kann. Sie kann separat vom Rest des Fahrzeugs F, insbesondere des Rahmens 1, vollständig betriebsfertig gemacht werden und muss dann nur noch an den Rahmen 1 montiert werden. Das Verfahren 65 zum Ausgleichen von Federbewegungen eines Fahrzeugs F beginnt mit einem Einfedern 66 des Hinterrads 3 oder des Vorderrads 2. Insbesondere handelt es sich hierbei um das angetriebene Rad des Fahrzeuges F. Die vorstehend beschriebene Zugmittelgetriebeeinheit 16 ermöglicht sodann ein Ausgleichen 67 einer durch die Federbewegung entstehenden Abstandsänderung zwischen der Antriebszugmittelscheibe 30 und der Abtriebszugmittelscheibe 31 durch ein Verschwenken 64 der Stützeinheiten 25, 26 um die Übertragungsachse 27 und ein gleichzeitiges Bewegen 69 der Stützeinheiten 25, 26, so dass sich die Übertragungsachse 27 relativ zum Rahmen 1 bewegt. Auf diese Weise kann ein bei konventionellen Fahrzeugen F, insbesondere Fahrrädern, auftretender Pedalkickback von der Zugmittelgetriebeeinheit 16 ausgeglichen beziehungsweise vermieden werden.

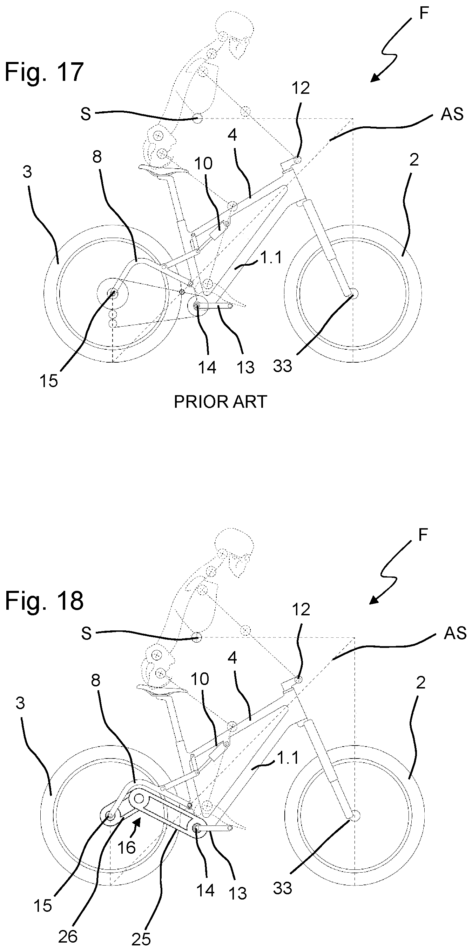

Die in den Figuren 17 und 18 dargestellte Gegenüberstellung zwischen einem Fahrzeug F mit einem aus dem Stand der Technik bekannten Antriebsstrang (Fig. 17; Stand der Technik) mit Zugmittel (zum Beispiel Kette) und Zugmittelspanner und dem erfindungsgemäßen Aufbau mit erfindungsgemäßer zweistufiger Zugmittelgetriebeeinheit 16 (Figur 18 greift ganz konkret auf den zu Figur 1 bereits detailliert beschriebenen Aufbau zurück) verdeutlicht die mit der Erfindung erreichten Vorteile hinsichtlich insbesondere des Antisquatverhaltens. Zur weiteren Veranschaulichung ist ferner jeweils in Phantomlinien ein Fahrer angedeutet. Die sogenannte Antisquatlinie AS ist bekanntermaßen definiert durch eine Frontvertikale durch die Vorderradachse und eine Heckvertikale durch die Hinterradachse. Der Schnittpunkt der Frontvertikalen mit einer auf Höhe des Gesamtschwerpunktes S des Fahrers und des Fahrzeugs verlaufenden Horizontalen sowie der Schnittpunkt der Heckvertikalen mit dem unteren Fußpunkt des Hinterrades definieren den Verlauf der Antisquatlinie AS. Dies verdeutlicht bereits, dass die Antisquatlinie AS an sich nicht statisch relativ zum Fahrzeugrahmen ist, sondern beispielsweise abhängig von der Lage des Gesamtschwerpunktes, abhängig vom Fahrer und/oder dessen Position, abhängig vom Federungszustand etc., für ein und dasselbe Fahrzeug F variieren kann. In der praktischen Konstruktion derartiger Fahrzeuge wird nun angestrebt, den Schnittpunkt des Zugmittels und den Schnittpunkt des Schwingendrehpunktes der Hinterradstrebe 8 möglichst auf der Antisquatlinie AS anzuordnen und idealerweise sogar aufeinander zu platzieren. Figur 17 verdeutlicht dabei ferner, dass sich für jeden eingestellten Gang der dort in an sich im Stand der Technik bekannter Weise vorhandenen Kettenschaltung am Hinterrad die Antisquatbedingungen ändern.

Im Vergleich hierzu liefert die in Figur 18 dargestellte Erfindung nun die optimale Lösung insbesondere auch hinsichtlich des Antisquat-Verhaltens des Fahrzeugs 1. Durch die kräftemäßige Entkoppelung des Zugmittelgetriebes bzw. der Zugmittelgetriebeeinheit 16 vom Rahmen 1 des Fahrzeugs F, insbesondere auch umfassend die im vorliegenden Ausführungsbeispiel gegenüber dem übrigen Rahmen verstellbare Hinterradstrebe 8, und die zweistufige und zueinander gelenkige Ausbildung der Zugmittelgetriebeeinheit 16, wie vorstehend bereits beschreiben, können beispielsweise Abstandsänderungen zwischen der Antriebsachse 14 und der Hinterradachse 15 bei unterschiedlichen Ein- und Ausfederlagen der Hinterradstrebe 8 durch Änderung des Knickwinkels zwischen den beiden Stützeinheiten 25 und 26 ausgeglichen werden, ohne dabei jedoch eine Rückwirkung auf die beiden Zugmittel der Zugmittelgetriebeeinheit 16 zu haben. Dies erlaubt neben den Möglichkeiten deutlich optimierte und sogar gezielt einstellbare Antisquateigenschaften zu erhalten, insbesondere auch hinsichtlich der Anlenkung der Hinterradschwinge einen in konstruktiver Hinsicht erheblich erweiterten Freiraum, denn insbesondere der Schnittpunkt eines Zugmittels an sich mit der Antisquatlinie AS spielt mit der vorliegenden Konstruktion keine Rolle mehr.

Teil der Offenbarung, unabhängig oder ergänzend zur vorhergehenden Offenbarung, insbesondere unabhängig oder ergänzend zu den in den Figuren dargestellten Ausführungsformen, oder zumindest Teilen davon, sind auch die nachfolgend angegebenen Gegenstände und Verfahren. Die angegebenen Bezugszeichen sind insbesondere lediglich ergänzend erläuternd und nicht einschränkend zu verstehen.
1 . Ein- oder mehrspuriges Fahrzeug (F) vom Typ Fahrrad, Pedelec, E-Bike oder Fahrrad mit Hilfs antrieb, mit a) wenigstens einem Vorderrad (2) und wenigstens einem Hinterrad (3), die über einen Rah men (1 ) miteinander verbunden sind, wobei das Vorderrad (2) um eine Vorderradachse (33) und das Hinterrad (3) um eine Hinterradachse (15) rotierbar am Rahmen (1 ) gelagert sind, und b) einer Zugmittelgetriebeeinheit (16) mit einem von einer Antriebszugmittelscheibe (30) angetriebenen Antriebszugmittel (28) und einem eine Abtriebszugmittelscheibe (31 ) antreibenden Abtriebszugmittel (29), wobei das Antriebs- (28) und das Abtriebszugmittel (29) in Serie zueinander angeordnet sind und über eine Übertragungszugmittelscheibeneinheit (41 ) miteinander in Übertragungsverbin dung stehen, wobei die Übertragungszugmittelscheibeneinheit (41 ) eine mit dem Antriebszug mittel (28) in Eingriff stehende Eingangszugmittelscheibe (42) und eine mit dem Abtriebszug mittel (29) in Eingriff stehende Ausgangszugmittelscheibe (43) aufweist, wobei die Eingangszug mittelscheibe (42) und die Ausgangszugmittelscheibe (43) um eine gemeinsame Übertragungs achse (27) drehbar sind, wobei die Antriebszugmittelscheibe (30) von einer mit Pedalen (13) und/oder einer Antriebs einheit (34) verbundenen Antriebswelle (35) und das Hinterrad (3) oder das Vorderrad (2) von der Abtriebszugmittelscheibe (31 ) angetrieben wird, dadurch **gekennzeichnet**, dass eine die Antriebszugmittelscheibe (30) und die Eingangszugmittelscheibe (42) lagernde erste Stützeinheit (25) zur Aufnahme von Spannkräften des Antriebszugmittels (28) unabhängig vom Rahmen (1) vorhanden ist, wobei eine die Ausgangszugmittelscheibe (43) und die Abtriebszugmittelscheibe (31) lagernde zweite Stützeinheit (26) zur Aufnahme von Spannkräften des Abtriebszugmittels (29) unabhän gig vom Rahmen (1) vorhanden ist, wobei der Rahmen (1) im Betrieb des Fahrzeugs (F) auftretende Radaufstandskräfte unter Um gehung der ersten Stützeinheit (25) und der zweiten Stützeinheit (26) aufnimmt, wobei die erste Stützeinheit (25) und die zweite Stützeinheit (26) relativ zueinander drehbar ausgebildet sind, und wobei die erste Stützeinheit (25) und die zweite Stützeinheit (26) drehbar am Rahmen (1) gelagert sind.
2. Fahrzeug (F) nach 1., dadurch gekennzeichnet, dass die Eingangszugmittelscheibe (42) und die Ausgangszugmittelscheibe (43) koaxial zur Über tragungsachse (27) angeordnet sind.
3. Fahrzeug (F) nach 1. oder 2., dadurch gekennzeichnet, dass die Eingangszugmittelscheibe (42) und die Ausgangszugmittelscheibe (43) drehfest zueinander und insbesondere zusammen einstückig ausgebildet sind.
4. Fahrzeug (F) nach einem der Punkte 1. bis 3., dadurch gekennzeichnet, dass das Übersetzungsverhältnis von der Eingangszugmittelscheibe (42) zur Ausgangszugmittel scheibe (43) und/oder von der Antriebszugmittelscheibe (30) zur Abtriebszugmittelscheibe (31) und/oder von der Antriebszugmittelscheibe (30) zur Eingangszugmittelscheibe (42) und/oder von der Ausgangszugmittelscheibe (43) zur Abtriebszugmittelscheibe (31) eins zu eins beträgt.
5. Fahrzeug (F) nach einem der Punkte 1. bis 4., dadurch gekennzeichnet, dass die erste Stützeinheit (25) ein erstes Gehäuse (36) aufweist und/oder die zweite Stützeinheit (26) ein zweites Gehäuse (38) aufweist, wobei die Gehäuse (36, 38) insbesondere aus Kunststoff hergestellt sind und das Antriebszugmittel (28) beziehungsweise das Abtriebszugmittel (29), insbesondere vollständig, einkapseln.
6. Fahrzeug (F) nach einem der Punkte 1. bis 5., dadurch gekennzeichnet, dass die erste Stützeinheit (25), insbesondere vollständig, vom ersten Gehäuse (36) gebildet wird, so dass dieses dazu ausgebildet ist, die Spannkräfte des Antriebszugmittels (28), insbesondere vollständig, aufzunehmen, und/oder dass die zweite Stützeinheit (26), insbesondere voll ständig, vom zweiten Gehäuse (38) gebildet wird, so dass dieses dazu ausgebildet ist, die Spannkräfte des Abtriebszugmittels (29), insbesondere vollständig, aufzunehmen.
7. Fahrzeug (F) nach einem der Punkte 1. bis 6., dadurch gekennzeichnet, dass die erste Stützeinheit (25) einen ersten Zugmittelspanner (39) zum Vorspannen des Antriebszugmittels (28) aufweist und/oder dass die zweite Stützeinheit (26) einen zweiten Zugmittelspanner (40) zum Vorspannen des Abtriebszugmittels (29) aufweist, wobei der erste und/oder der zweite Zugmittelspanner (39, 40) insbesondere als Exzenterzugmittelspanner ausgebildet ist.
8. Fahrzeug (F) nach einem der Punkte 1. bis 7., dadurch gekennzeichnet, dass der erste und/oder der zweite Zugmittelspanner (39, 40) an der Übertragungszugmittelscheibeneinheit (41) angeordnet sind, wobei insbesondere wenigstens ein Vorspannzugang (32) vorhanden ist, durch den hindurch der erste und/oder der zweite Zugmittelspanner (39, 40) zur Einstellung einer Vorspannposition von außen zugänglich ist.
9. Fahrzeug (F) nach einem der Punkte 7. - 8., dadurch gekennzeichnet, dass die Übertragungszugmittelscheibeneinheit (41) über ein Drehlager (37) an der ersten Stützeinheit (25) und/oder der zweiten Stützeinheit (26) gelagert ist, und dass der erste und/oder der zweite Zugmittelspanner (39, 40) innerhalb oder außerhalb dieses Drehlagers (37) angeordnet ist.
10. Fahrzeug (F) nach einem der Punkte 1. bis 9., dadurch gekennzeichnet, dass das Antriebszugmittel (28) und/oder das Abtriebszugmittel (29) als Riemen, insbesondere Zahnriemen, ausgebildet ist.
11. Fahrzeug (F) nach einem der Punkte 1. bis 10., dadurch gekennzeichnet, dass eine Bremseinrichtung mit einem Bremssattel (18) und einer Bremsscheibe (17) vorhanden ist, wobei der Bremssattel (18) und/oder die Bremsscheibe (17) an der Zugmittelgetriebeeinheit (16) gelagert ist, wobei die Bremsscheibe (17) insbesondere koaxial mit der Antriebszugmittel scheibe (30) oder der Abtriebszugmittelscheibe (31) oder der Übertragungszugmittelscheibeneinheit (41) angeordnet ist, und wobei der Bremssattel (18) insbesondere am Gehäuse (36, 38) der Zugmittelgetriebeeinheit (16) gelagert ist.
12. Fahrzeug (F) nach einem der Punkte 1. bis 11., dadurch gekennzeichnet, dass die Zugmittelgetriebeeinheit (16) wenigstens eines der folgenden Merkmale aufweist: - sie umfasst einen Geschwindigkeitssensor (54), wobei der Geschwindigkeitssensor (54) insbesondere an der Antriebszugmittelscheibe (30) oder der Abtriebszugmittelscheibe (31) oder der Übertragungszugmittelscheibeneinheit (41) angeordnet ist; und/oder - sie umfasst einen elektrischen Generator (55) zur Rückgewinnung von Antriebsenergie als elektrische Energie; und/oder - sie umfasst einen Federwegsensor (56), der eine Rotation der Stützeinheiten (25, 26) gegeneinander oder eine Rotation der vorderen Stützeinheit (25) relativ zum Rahmen oder Motor misst.
13. Fahrzeug (F) nach einem der Punkte 1. bis 12., dadurch gekennzeichnet, dass die Zugmittelgetriebeeinheit (16) wenigstens eines der folgenden Merkmale aufweist: - die Übertragungszugmittelscheibeneinheit (41), und insbesondere auch die Gehäuse (36, 38) der Stützeinheiten (25, 26), umfasst eine Durchgangsöffnung (57), die die Zugmittelgetriebeeinheit (16) durchdringt und nach außen geöffnet ausgebildet ist; und/oder - die Durchgangsöffnung (57) ist koaxial zur Übertragungsachse (27) ausgebildet; und/oder- die Durchgangsöffnung (57) ist in Radialrichtung der Übertragungsachse (27) durch ein Innengehäuse (44) begrenzt; und/oder - das Innengehäuse (44) ist drehfest mit der Übertragungszugmittelscheibeneinheit (41) und mit dieser rotierbar ausgebildet; und/oder - im Bereich der Durchgangsöffnung (57) ist wenigstens eine Beleuchtungseinrichtung (58) angeordnet, die insbesondere das Innengehäuse (44) beleuchtet.
14. Fahrzeug (F) nach einem der Punkte 1. bis 13., dadurch gekennzeichnet, dass die Zugmittelgetriebeeinheit (16) derart ausgebildet ist, dass sie vollständig entkoppelt vom Rahmen (1) Spannkräfte der wenigstens zwei Zugmittel aufnimmt und in die Zugmittelgetriebeeinheit (16) über eine Antriebszugmittelscheibe eingeleitete Drehmomentkräfte isoliert vom Rahmen an die Abtriebszugmittelscheibe überträgt.
15. Fahrzeug (F) nach einem der Punkte 1. bis 14., dadurch gekennzeichnet, dass die erste Stützeinheit (25) um eine Antriebsachse (14) des Fahrzeugs (F) drehbar am Rahmen (1) gelagert ist und/oder dass die zweite Stützeinheit (26) um die Hinterradachse (15) oder die Vorderradachse (33) des Fahrzeugs (F) drehbar am Rahmen (1 ) gelagert ist, wobei insbesondere die Zugmittelgetriebeeinheit (16) ausschließlich über diese Lager am Rahmen (1) gelagert ist.
16. Fahrzeug (F) nach Punkt 15, dadurch gekennzeichnet, dass die Antriebszugmittelscheibe (30) koaxial zur Antriebsachse (14) des Fahrzeugs (F) angeordnet ist und/oder dass die Abtriebszugmittelscheibe (31 ) koaxial zur Hinterradachse (15) oder der Vorderradachse (33) des Fahrzeugs (F) angeordnet ist.
17. Fahrzeug (F) nach einem der Punkte 14. oder 15., dadurch gekennzeichnet, dass die Übertragungsachse (27) vertikal über oder unter der Antriebsachse (14) und/oder der Hinterradachse (15) beziehungsweise der Vorderradachse (33) des Fahrzeugs (F) angeordnet ist.
18. Fahrzeug (F) nach einem der Punkte 1. bis 17., dadurch gekennzeichnet, dass die zweite Stützeinheit (26) gegenüber der ersten Stützeinheit (25) in Richtung der Hinterradachse (15) oder der Vorderradachse (33) zur Fahrzeugmitte hin versetzt angeordnet ist.
19. Fahrzeug (F) nach einem der Punkte 1. bis 18., dadurch gekennzeichnet, dass es wenigstens eines der folgenden Merkmale aufweist: - das Hinterrad (3) und/oder das Vorderrad (2) weist einen um eine Symmetrieachse (48) symmetrischen Satz Speichen (22) auf; und/oder - das Hinterrad (3) ist mit wenigstens einer zum Rahmen (1) gehörenden Hinterradstrebe (8) beziehungsweise Hinterradschwinge verbunden; und/oder - die Hinterradstrebe (8) ist um ein Strebenlager (53) drehbar mit dem restlichen Rahmen (1), insbesondere einem Sattelrohr (6), verbunden; und/oder - die Hinterradstrebe (8) ist vertikal nach oben gebogen ausgebildet und umgreift die Zugmittelgetriebeeinheit (16) insbesondere vertikal über der Zugmittelgetriebeeinheit (16); und/oder - das Hinterrad (3) ist, insbesondere mittelbar über die Hinterradstrebe (8), über einen Dämpfer (10) gefedert am Rahmen (1) gelagert; und/oder - das Strebenlager (53) ist versetzt zur rahmenseitigen Drehachse der ersten Stützeinheit (25) angeordnet; und/oder - das Strebenlager (53) ist vertikal über der rahmenseitigen Drehachse der ersten Stütz einheit (25), beispielsweise der Antriebsachse (14), angeordnet.
20. Fahrzeug (F) nach einem der Punkte 1. bis 19., dadurch gekennzeichnet , dass die Zugmittelgetriebeeinheit (16) modular als zusammenhängend vom Fahrzeug (F) abnehmbare beziehungsweise am Fahrzeug (F) montierbare Konstruktionseinheit mit einer Brems scheibe (17) und/oder einem Bremssattel (18) ausgebildet ist, wobei die Konstruktionseinheit insbesondere derart ausgebildet ist, dass das Antriebszugmittel (28) und/oder das Abtriebszugmittel (29) vorspannbar sind, unabhängig davon, ob die Konstruktionseinheit am Fahrzeug (F) montiert ist.
21. Fahrzeug (F) nach einem der Punkte 1. bis 20., dadurch gekennzeichnet , dass die Abtriebszugmittelscheibe (31) über einen axial lösbaren und in Umlaufrichtung wirken den Formschluss (52), insbesondere einer Stirnverzahnung, mit einem Hinterradnabenkörper (23) oder einem Vorderradnabenkörper (59) verbunden ist.
22. Fahrzeug (F) nach einem der Punkte 1. bis 21., dadurch gekennzeichnet , dass der Hinterradnabenkörper (23) und/oder der Vorderradnabenkörper (59) über den Formschluss (52) von der Abtriebszugmittelscheibe (31) derart demontierbar ausgebildet ist, dass der Hinterradnabenkörper (23) und/oder der Vorderradnabenkörper (59) zusammen mit dem Hinterrad (3) beziehungsweise dem Vorderrad (2) vom Fahrzeug demontierbar ist, während die Zugmittelgetriebeeinheit (16) mit der Abtriebszugmittelscheibe (31), und insbesondere der Bremsscheibe (17) und/oder dem Bremssattel (18), am Rahmen (1) verbleibt.
23. Verfahren (60) zum Montieren eines Fahrzeugs (F), insbesondere eines Fahrzeugs (F) gemäß einem der Punkte 1 bis 22, wobei das Fahrzeug (F) eine modulare Zugmittelgetrie beeinheit (16) mit einer ersten Stützeinheit (25) mit einem Antriebszugmittel (28) und einer zweiten Stützeinheit (26) mit einem Abtriebszugmittel (29) aufweist, wobei die beiden Stützeinheiten (25, 26) gelenkig miteinander verbunden und um eine gemeinsame Übertragungs achse (27) gegeneinander verschwenkbar sind, umfassend die Schritte: a) Vorspannen (61) des Antriebszugmittels (28) und des Abtriebszugmittels (29) in der Zugmittelgetriebeeinheit (16), wobei die Vorspannkräfte des Antriebszugmittels (28) und des Abtriebszugmittels (29) ausschließlich von den Stützeinheiten (25, 26) aufgenommen werden, b) Einsetzen (62) der modularen Zugmittelgetriebeeinheit (16) am Fahrzeug (F) und c) Ausgleichen (63) von Toleranzen durch ein Verschwenken (64) der Stützeinheiten (25, 26) um die Übertragungsachse (27).
24. Verfahren (65) zum Vermeiden von Pedalkickback bei einem Fahrzeug (F), insbesondere einem Fahrzeugs (F) gemäß einem der Punkte 1 bis 22 und/oder einem gemäß dem Verfahren nach Punkt 23 montierten Fahrzeug (F), wobei das Fahrzeug (F) einen Rahmen (1), ein gefedertes Hinterrad (3) oder ein gefedertes Vorderrad (2) und eine modulare Zugmittelgetriebeeinheit (16) mit einer ersten Stützeinheit (25) mit einem Antriebszugmittel (28) und einer zweiten Stützeinheit (26) mit einem Abtriebszugmittel (29) aufweist, wobei die beiden Stützeinheiten (25, 26) gelenkig miteinander verbunden und um eine gemeinsame Übertragungsachse (27) gegeneinander verschwenkbar sind, und wobei die Zugmittelgetriebeeinheit (16) Antriebsenergie von einer Antriebszugmittelscheibe (30) auf eine Abtriebszugmittelscheibe (31) überträgt, umfassend die Schritte: a) Einfedern (66) des Hinterrads (3) oder des Vorderrads (2) und b) Ausgleichen (67) einer durch die Federbewegung entstehenden Abstandsänderung zwischen der Antriebszugmittelscheibe (30) und der Abtriebszugmittelscheibe (31) durch ein Verschwenken (64) der Stützeinheiten (25, 26) um die Übertragungs achse (27) und ein gleichzeitiges Bewegen (69) der Stützeinheiten (25, 26), so dass sich die Übertragungsachse (27) relativ zum Rahmen (1) bewegt.
25. Verfahren zum Übertragen eines Antriebsdrehmomentes eines ein- oder mehrspurigen Fahrzeuges (F) über eine Zugmittelgetriebeeinheit (16), insbesondere bei einem Fahrzeug (F) gemäß einem der Punkte 1 bis 22, gekennzeichnet durch die Schritte: - Aufnehmen von Spannkräften einer Zugmittelgetriebeeinheit isoliert zu einem Rahmen; - Einleiten von Drehmomentkräften über eine Antriebszugmittelscheibe in die Zugmittelgetriebeeinheit; - Übertragen der Drehmomentkräfte zu einer Abtriebszugmittelscheibe isoliert zu dem Rahmen über wenigstens zwei, insbesondere in Reihe zueinander angeordnete, Zugmittel; - Ausleiten der Drehmomentkräfte über die Abtriebszugmittelscheibe zum Antreiben des Vor der- oder Hinterrades.
26. Verfahren zum Eliminieren der Wechselwirkung zwischen einem Antriebsstrang mit einer Zug mittelgetriebeeinheit (16) und einer Feder-/Dämpfungseinrichtung (10) bei einem ein- oder mehrspurigen Fahrzeug (F), insbesondere Fahrrad, Pedelec, E-Bike oder Fahrrad mit Hilfsantrieb, insbesondere einem Fahrzeug (F) gemäß einem der Punkte 1-22, mit einem Vorderrad (2) und wenigstens einem Hinterrad (3), die über einen Rahmen (1), umfassend einen Hauptrahmen (1.1) und eine schwenkbar an diesem gelagerte Radstrebe (8), miteinander verbunden sind, wobei das Vorderrad (2) um eine Vorderradachse (33) und das Hinterrad (3) um eine Hinterradachse (15) rotierbar gelagert sind, und wobei das Vorderrad (2) oder das Hinterrad (3) über die Radstrebe (8) am Hauptrahmen (1 .1) gelagert ist, mit einer Zugmittelgetriebeeinheit (16) mit wenigstens zwei, insbesondere in Serie zueinander angeordneten, Zugmitteln (28, 29), insbesondere einer Zugmittelgetriebeeinheit (16) gemäß einem der vorhergehenden Punkte, wobei die Zugmittelgetriebeeinheit (16) in Antriebsverbindung zwischen einer Antriebsachse (14) und einer Drehachse (15, 33) des Vorderrades (2) oder des Hinterrades (3) steht, umfassend die Schritte: -mithilfe der Feder-/Dämpfungseinrichtung (10) gedämpftes Verschwenken der Radstrebe (8) und des daran gelagerten Rades (2,3) relativ zum Hauptrahmen (1.1); - von Zugkräften der Zugmittel (28,29) unabhängiges Übertragen der Antriebsdrehmomente auf das Verschwenken der Radstrebe (8) und des daran gelagerten Rades (2,3) relativ zum Hauptrahmen (1 .1); - Ausgleichen von Abstandsänderungen zwischen der Antriebsachse (14) und der Drehachse (15, 33) durch eine Verdrehung einer ersten Stützeinheit (25) eines Antriebszugmittels (28) relativ zu einer zweiten Stützeinheit (26) eines Abtriebszugmittels (29) der Zugmittelgetriebe einheit (16).
27. Zugmittelgetriebeeinheit (16) für ein ein- oder mehrspuriges Fahrzeug (F), insbesondere Fahrrad, Pedelec, E-Bike oder Fahrrad mit Hilfsantrieb, mit - einem von einer Antriebszugmittelscheibe (30) angetriebenen Antriebszugmittel (28), - einem eine Abtriebszugmittelscheibe (31) antreibenden Abtriebszugmittel (29), wobei das Antriebs- (28) und das Abtriebszugmittel (29) in Serie zueinander angeordnet sind und über eine Übertragungszugmittelscheibeneinheit (41) miteinander in Übertragungsverbindung stehen, wobei die Übertragungszugmittelscheibeneinheit (41) eine mit dem Antriebszug mittel (28) in Eingriff stehende Eingangszugmittelscheibe (42) und eine mit dem Abtriebszug mittel (29) in Eingriff stehende Ausgangszugmittelscheibe (43) aufweist, wobei die Eingangszug mittelscheibe (42) und die Ausgangszugmittelscheibe (43) koaxial zueinander drehbar sind, dadurch gekennzeichnet, dass eine die Antriebszugmittelscheibe (30) und die Eingangszugmittelscheibe (42) lagernde erste Stützeinheit (25) zur Aufnahme der Spannkräfte des Antriebszugmittels (28) vorhanden ist, und wobei eine die Ausgangszugmittelscheibe (43) und die Abtriebszugmittelscheibe (31) lagernde zweite Stützeinheit (26) zur Aufnahme der Spannkräfte des Abtriebszugmittels (29) vorhanden ist, wobei die erste Stützeinheit (25) und die zweite Stützeinheit (26) relativ zueinander drehbar ausgebildet sind, wobei die erste Stützeinheit (25) einen ersten Zugmittelspanner (39) zum Vorspannen des Antriebszugmittels (28) aufweist und/oder dass die zweite Stützeinheit (26) einen zweiten Zugmittelspanner (40) zum Vorspannen des Abtriebszugmittels (29) aufweist, wobei der erste und/oder der zweite Zugmittelspanner (39, 40) als Exzenterzugmittelspanner ausgebildet ist, und wobei der erste und/oder der zweite Zugmittelspanner (39, 40) an der Übertragungszugmittelscheibeneinheit (41) angeordnet sind, wobei insbesondere wenigstens ein Vorspannzugang (32) vorhanden ist, durch den hindurch der erste und/oder der zweite Zugmittelspanner (39, 40) zur Einstellung einer Vorspannposition von außen zugänglich ist.

## Patentansprüche

1. Zugmittelgetriebeeinheit (16) für ein ein- oder mehrspuriges Fahrzeug (F),
insbesondere Fahrrad, Pedelec, E-Bike oder Fahrrad mit Hilfsantrieb, mit
einem von einer Antriebszugmittelscheibe (30) angetriebenen Antriebszugmittel (28),
einem eine Abtriebszugmittelscheibe (31) antreibenden Abtriebszugmittel (29),
wobei das Antriebs- (28) und das Abtriebszugmittel (29) in Serie zueinander angeordnet sind und über eine Übertragungszugmittelscheibeneinheit (41) miteinander in Übertragungsverbindung stehen, wobei die Übertragungszugmittelscheibeneinheit (41) eine mit dem Antriebszugmittel (28) in Eingriff stehende Eingangszugmittelscheibe (42) und eine mit dem Abtriebszugmittel (29) in Eingriff stehende Ausgangszugmittelscheibe (43) aufweist, wobei die Eingangszugmittelscheibe (42) und die Ausgangszugmittelscheibe (43) koaxial zueinander drehbar sind,
**dadurch gekennzeichnet,**
**dass** eine die Antriebszugmittelscheibe (30) und die Eingangszugmittelscheibe (42) lagernde erste Stützeinheit (25) zur Aufnahme der Spannkräfte des Antriebszugmittels (28) vorhanden ist, und wobei eine die Ausgangszugmittelscheibe (43) und die Abtriebszugmittelscheibe (31) lagernde zweite Stützeinheit (26) zur Aufnahme der Spannkräfte des Abtriebszugmittels (29) vorhanden ist,
**dass** das Antriebszugmittel (28) und/oder das Abtriebszugmittel (29) als Zahnriemen ausgebildet ist.
wobei die erste Stützeinheit (25) und die zweite Stützeinheit (26) relativ zueinander drehbar ausgebildet sind,
wobei die erste Stützeinheit (25) einen ersten Zugmittelspanner (39) zum Vorspannen des Antriebszugmittels (28) aufweist und/oder dass die zweite Stützeinheit (26) einen zweiten Zugmittelspanner (40) zum Vorspannen des Abtriebszugmittels (29) aufweist, wobei der erste und/oder der zweite Zugmittelspanner (39, 40) als Exzenterzugmittelspanner ausgebildet ist, und
wobei der erste und/oder der zweite Zugmittelspanner (39, 40) an der Übertragungszugmittelscheibeneinheit (41) angeordnet sind,

2. Zugmittelgetriebeeinheit (16) nach dem vorhergehenden Anspruch,
**dadurch gekennzeichnet,**
**dass** wenigstens ein Vorspannzugang (32) vorhanden ist, durch den hindurch der erste und/oder der zweite Zugmittelspanner (39, 40) zur Einstellung einer Vorspannposition von außen zugänglich ist.

3. Zugmittelgetriebeeinheit (16) nach dem vorhergehenden Anspruch,
**dadurch gekennzeichnet,**
**dass** die Eingangszugmittelscheibe (42) und die Ausgangszugmittelscheibe (43) um eine gemeinsame Übertragungsachse (27) drehbar sind.

4. Zugmittelgetriebeeinheit (16) nach einem der vorhergehenden Ansprüche,
**dadurch gekennzeichnet,**
**dass** die Eingangszugmittelscheibe (42) und die Ausgangszugmittelscheibe (43) drehfest zueinander ausgebildet sind.

5. Zugmittelgetriebeeinheit (16) nach Anspruch 4,
**dadurch gekennzeichnet,**
**dass** die Eingangszugmittelscheibe (42) und die Ausgangszugmittelscheibe (43) zusammen einstückig ausgebildet sind.

6. Zugmittelgetriebeeinheit (16) nach einem der vorhergehenden Ansprüche,
**dadurch gekennzeichnet,**
**dass** das Übersetzungsverhältnis von der Eingangszugmittelscheibe (42) zur Ausgangszugmittelscheibe (43) und/oder von der Antriebszugmittelscheibe (30) zur Abtriebszugmittelscheibe (31) und/oder von der Antriebszugmittelscheibe (30) zur Eingangszugmittelscheibe (42) und/oder von der Ausgangszugmittelscheibe (43) zur Abtriebszugmittelscheibe (31) eins zu eins beträgt oder größer oder kleiner ist.

7. Zugmittelgetriebeeinheit (16) einem der vorhergehenden Ansprüche,
**dadurch gekennzeichnet,**
**dass** die erste Stützeinheit (25) ein erstes Gehäuse (36) aufweist und/oder die zweite Stützeinheit (26) ein zweites Gehäuse (38) aufweist, wobei die Gehäuse (36, 38) das Antriebszugmittel (28) beziehungsweise das Abtriebszugmittel (29) einkapseln.

8. Zugmittelgetriebeeinheit (16) Anspruch 7,
**dadurch gekennzeichnet,**
**dass** das erste Gehäuse (36) und das zweite Gehäuse (38) aus Kunststoff hergestellt sind.

9. Zugmittelgetriebeeinheit (16) nach einem der Ansprüche 7 oder 8,
**dadurch gekennzeichnet,**
**dass** die erste Stützeinheit (25) vom ersten Gehäuse (36) gebildet wird, so dass dieses dazu ausgebildet ist, die Spannkräfte des Antriebszugmittels (28) aufzunehmen, und/oder dass die zweite Stützeinheit (26) vom zweiten Gehäuse (38) gebildet wird, so dass dieses dazu ausgebildet ist, die Spannkräfte des Abtriebszugmittels (29) aufzunehmen.

10. Zugmittelgetriebeeinheit (16) nach einem der vorhergehenden Ansprüche,
**dadurch gekennzeichnet,**
**dass** die Übertragungszugmittelscheibeneinheit (41) über ein Drehlager (37) an der ersten Stützeinheit (25) und/oder der zweiten Stützeinheit (26) gelagert ist, und dass der erste und/oder der zweite Zugmittelspanner (39, 40) innerhalb oder außerhalb dieses Drehlagers (37) angeordnet ist.

11. Ein- oder mehrspuriges Fahrzeug (F) vom Typ Fahrrad, Pedelec, E-Bike oder Fahrrad mit Hilfsantrieb, mit
a) wenigstens einem Vorderrad (2) und wenigstens einem Hinterrad (3), die über einen Rahmen (1) miteinander verbunden sind, wobei das Vorderrad (2) um eine Vorderradachse (33) und das Hinterrad (3) um eine Hinterradachse (15) rotierbar am Rahmen (1) gelagert sind, und
b) einer Zugmittelgetriebeeinheit (16) gemäß einem der vorhergehenden Ansprüche.

12. Ein- oder mehrspuriges Fahrzeug (F) nach Anspruch 11,
**dadurch gekennzeichnet,**
**dass** die Zugmittelgetriebeeinheit (16) als separates und in sich zusammenhängendes Modul ausgebildet ist, das als zusammenhängende Gesamtheit am Fahrzeug (F) montierbar ist.

13. Verfahren (60) zum Montieren eines Fahrzeugs (F), insbesondere eines Fahrzeugs (F) gemäß einem der Ansprüche 11 oder 12, wobei das Fahrzeug (F) eine modulare Zugmittelgetriebeeinheit (16) mit einer ersten Stützeinheit (25) mit einem Antriebszugmittel (28) und einer zweiten Stützeinheit (26) mit einem Abtriebszugmittel (29) aufweist, wobei die beiden Stützeinheiten (25, 26) gelenkig miteinander verbunden und um eine gemeinsame Übertragungsachse (27) gegeneinander verschwenkbar sind, umfassend die Schritte:
Vorspannen (61) des Antriebszugmittels (28) und des Abtriebszugmittels (29) in der Zugmittelgetriebeeinheit (16), wobei die Vorspannkräfte des Antriebszugmittels (28) und des Abtriebszugmittels (29) ausschließlich von den Stützeinheiten (25, 26) aufgenommen werden,
Einsetzen (62) der modularen Zugmittelgetriebeeinheit (16) am Fahrzeug (F) und Ausgleichen (63) von Toleranzen durch ein Verschwenken (64) der Stützeinheiten (25, 26) um die Übertragungsachse (27).
